(19)

**Europäisches Patentamt**
**European Patent Office**
**Office européen des brevets**

(11) **EP 4 637 154 A1**

(12) **EUROPEAN PATENT APPLICATION**

(43) Date of publication:
**22.10.2025 Bulletin 2025/43**

(21) Application number: **25157367.1**

(22) Date of filing: **12.02.2025**

(51) International Patent Classification (IPC):
*H04N 19/523* (2014.01)  *H04N 19/109* (2014.01)
*H04N 19/176* (2014.01)  *H04N 19/139* (2014.01)
*H04N 19/147* (2014.01)  *H04N 19/105* (2014.01)
*H04N 19/52* (2014.01)

(52) Cooperative Patent Classification (CPC):
**H04N 19/176; H04N 19/109; H04N 19/139;**
**H04N 19/147; H04N 19/52; H04N 19/523**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.04.2024 US 202418635840**

(71) Applicant: **INTEL Corporation**
**Santa Clara, CA 95054 (US)**

(72) Inventors:
• **CHIU, Yi-Jen**
**San Jose, 95129 (US)**
• **XU, Qian**
**Folsom, 95630 (US)**
• **ZHANG, Ximin**
**San Jose, 95129 (US)**

(74) Representative: **HGF**
**HGF Limited**
**1 City Walk**
**Leeds LS11 9DX (GB)**

(54) **PRECISION DETERMINATION AND FAST CANDIDATE SELECTION FOR MERGE MODE WITH MOTION VECTOR DIFFERENCE IN VIDEO ENCODING**

(57)    Different approaches for reducing complexity and computations in inter-prediction encoding are described. The approaches may involve one or more of quantization parameter and motion information being used to make a precision decision at a picture level that can improve compression efficiency. The approaches may involve finding prediction costs for the motion vector difference candidates and then performing rate-distortion optimization using the selected motion vector difference candidate having the lowest prediction cost. Prediction costs may be determined using sums of absolute transformed differences, which can be calculated efficiently in hardware. The rate-distortion cost of using merge mode with motion vector difference with the selected motion vector difference candidate may be compared against one or more other rate-distortion costs. In addition, in some scenarios, the approaches may involve finding prediction costs for a subset of the motion vector difference candidates to further reduce computations.

1300

SELECT A PRECISION 1302

DETERMINE ONE OR MORE MOTION VECTOR DIFFERENCE CANDIDATES BASED ON THE SELECTED PRECISION, MOTION VECTOR STARTING POINT(S), AVAILABLE DISTANCE(S), AND AVAILABLE DIRECTION(S) 1304

SELECT A MOTION VECTOR DIFFERENCE CANDIDATE BASED ON ONE OR MORE PREDICTION COSTS ASSOCIATED WITH THE MOTION VECTOR DIFFERENCE CANDIDATES 1306

DETERMINE A PLURALITY OF RD COSTS, THE RD COSTS COMPRISING A FIRST RD COST ASSOCIATED WITH USING THE SELECTED MOTION VECTOR DIFFERENCE CANDIDATE 1308

DETERMINE AN INTER-PREDICTION DECISION BASED ON THE PLURALITY OF RD COSTS AND APPLY THE INTER-PREDICTION DECISION TO PREDICT THE BLOCK 1310

**FIG. 13**

EP 4 637 154 A1

**Description**

Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

Brief Description of the Drawings

Embodiments will be readily understood by the following detailed description in conjunction with the accompanying drawings. To facilitate this description, like reference numerals designate like structural elements. Embodiments are illustrated byway of example, and not bywayof limitation, in the figures of the accompanying drawings.

FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates generation of a merge list and an exemplary merge list, according to some embodiments of the disclosure.
FIG. 5 depicts a table of magnitude indices and corresponding magnitudes, according to some embodiments of the disclosure.
FIG. 6 depicts a table of direction indices and corresponding directions, according to some embodiments of the disclosure.
FIG. 7 illustrates a search space for a starting point, according to some embodiments of the disclosure.
FIG. 8 illustrates inter-prediction in an encoder, according to some embodiments of the disclosure.
FIG. 9 illustrates an inter-prediction decision process, according to some embodiments of the disclosure.
FIG. 10 illustrates a precision decision process, according to some embodiments of the disclosure.
FIG. 11 illustrates a precision decision process, according to some embodiments of the disclosure.
FIG. 12 illustrates a precision decision process, according to some embodiments of the disclosure.
FIG. 13 illustrates a method for making an inter-prediction decision, according to some embodiments of the disclosure.
FIG. 14 depicts a block diagram of an exemplary computing device, according to some embodiments of the disclosure.

Detailed Description

*Overview*

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. A frame may include an image, or a single still image. A frame may have millions of pixels. For example, a frame for an uncompressed 4K video may have a resolution of 3840x2160 pixels. Pixels may have luma/luminance and chroma/chrominance values. The terms "frame" and "picture" may be used interchangeably. In some cases, a frame may be partitioned into one or more blocks. Blocks may be used for block-based compression. The blocks of pixels resulting from partitioning may be referred to as partitions. Blocks may have sizes which are much smaller, such as 512x512 pixels, 256x256 pixels, 128x128 pixels, 64x64 pixels, 32x32 pixels, 16x16pixels, 8x8 pixels, 4x4 pixels, etc. A block may include a square or rectangular region of a frame. Various video compression techniques may use different terminology for the blocks or different partitioning structures for creating the blocks. In some video compression techniques, a frame may be partitioned into Coding Tree Units (CTUs). ACTU may be divided (separately for luma and chroma components) into Coding Tree Blocks (CTBs). A CTB can have a size of 64x64 pixels, 32x32 pixels, or 16x16 pixels. A CTB can be divided into Coding Units (CUs). ACU can be divided into Prediction Units (PUs) and/or discrete cosine transforms (DCT) Transform Units (TUs). CTUs, CTBs, CUs, PUs, and TUs may be considered blocks or partitions herein.

One of the tasks of an encoder in a video codec is to make encoding decisions at different levels for the video (e.g., sequence level, GOP level, frame/picture level, slice level, CTU level, CTB level, block level, CU level, PU level, TU level, etc.), based on a desired bitrate and/or desired (objective and/or subjective) quality. Making encoding decisions may include evaluating different options or parameter values for encoding the data, and determining optimal options or parameter values that may achieve the desired bitrate and/or quality. The chosen option and/or parameter values may be applied to encode the video to generate a bitstream. The chosen option and/or parameter values would be encoded in the bitstream to signal to a decoder how to decode the encoded bitstream in accordance with the encoding decisions which were made by the decoder. Modern codecs offer a wide range of options and parameter values. While evaluating all possible combinations of options and parameter values may yield the most optimal encoding decision, an encoder does not have unlimited resources to afford the complexity that would be required to evaluate each available option and parameter value.

While some codecs can achieve significant subjective quality improvement with similar bitrates compared to earlier codecs, the improvements came at a cost of added complexity in the encoder and decoder. It is a technical challenge to reduce complexity in the encoder while making little to no impact to the quality of the video.

Inter-prediction (or inter-frame prediction) includes the process of encoding blocks using motion vectors or motion vector predictors. Inter-prediction can take advantage of temporal redundancies to perform compression. A motion vector may be applied to block to generate predicted samples. Predicted residues are generated based on original samples and predicted samples. The motion vector and predicted residues are encoded in the bitstream.

In some codecs, inter-prediction takes advantage of further redundancies through merge mode. Merge mode includes the use of a merge list or merge candidate list. A merge list may include one or more motion vector predictors or motion vector predictor candidates. The predictors may include motion vectors from neighboring blocks of the same frame. The predictors may include motion vectors from blocks of a neighboring frame. Rather than encoding the current motion vector (of a current block) itself, merge mode allows an index to the merge list to be encoded instead. Merge mode takes advantage of spatial and temporal motion similarities of adjacent blocks for motion vector prediction. In some cases, a motion vector is encoded with the index to the merge list without any motion vector residue. When using the index to the merge list to encode the current motion vector, the current motion vector may not be encoded accurately because the referenced motion vector predictor by the index in the merge list may not be exactly the same as the current motion vector. If a motion vector residue is to be encoded for accuracy, merge mode may be disabled, and the motion vector bit cost would be much higher compared to in merge mode.

To alleviate this problem, a merge mode with motion vector difference (MMVD) technique has been introduced. MMVD, or MMVD mode involves a signaling scheme to encode the motion vector residue or offset relative to a first motion vector predictor or a second motion vector predictor in the merge list. An MMVD flag may be signaled after a regular merge flag to indicate whether MMVD mode is used for inter-prediction of a block (e.g., a CU). If MMVD mode is enabled for the current block, the current motion vector may be encoded using a motion vector difference (MVD). MVD may adequately capture the current motion vector (and potentially more accurately capture the current motion vector when compared to regular merge mode without an MVD). MVD signaling may include one or more of: a merge candidate flag or bit, an index to specify the magnitude of the MVD, and an index to indicate the direction of the MVD. The magnitude may be either integer pel based or quad pel based, depending on a precision flag signaled in the frame/picture header. In some cases, the precision may be a fractional precision or an integer precision. The merge candidate flag/bit may select or indicate a selection of one of the first motion vector predictor in the merge list (e.g., a first motion vector starting point) and the second motion vector predictor in the merge list (e.g., a second motion vector starting point). The magnitudes may include powers of two, and there may be 8 different available magnitudes. There may be 4 different available directions.

While MMVD can improve the accuracy of motion vector encoding and potentially offer an efficient manner to encode a motion vector residue as an MVD, MMVD mode can increase the complexity of inter-prediction greatly.

To decide the optimal MVD precision, ideally, 2-pass encoding would be implemented to compare the picture level or frame level rate-distortion costs of using fractional precision versus integer precision. Using 2-pass encoding would double encoding complexity. In some encoders, the MVD precision may be decided based on resolution, but such a precision decision is not optimal and may result in suboptimal compression efficiency. For example, in some encoders, quarter pel precision may be used if the picture width x picture height is less than or equal to 1920x1080 pixels, and integer pel precision otherwise. To address this concern, different approaches for reducing complexity and to make an optimal precision decision may be implemented. The approaches may involve one or more of quantization parameter and motion information being used to make a precision decision at a picture level or frame level that can improve compression efficiency. The precision decision may be based on quantization parameter for the frame. The precision decision may be based on motion information or content of the frame. In some cases, the precision decision may be based further on resolution of the frame.

To decide or select the optimal MVD, 64 possible motion vector difference candidates may be considered for each block (e.g., each CU). It would not be practical, in fact time-consuming and computationally intensive, to perform a brute-force rate-distortion optimization (RDO) or search on all 64 possible MVD candidates. To address this concern, different approaches for reducing computations may be implemented. The approaches may involve finding prediction costs for the MVD candidates and then performing RDO using the selected MVD candidate having the lowest prediction cost. Prediction costs may be determined using, e.g., sums of absolute transformed differences (SATDs), which can be calculated efficiently in hardware. The rate-distortion (RD) cost of using MMVD with the selected MVD candidate may be compared against one or more other RD costs. In addition, in some scenarios, such as low motion frames and/or low resolution frames, the approaches may involve finding prediction costs for a subset of the MVD candidates to further reduce computations.

Techniques for making inter-prediction decisions described and illustrated herein may be applied to a variety of codecs, such as AVC (Advanced Video Coding), HEVC (High Efficiency Video Coding), AV1 (AOMedia Video 1), and WC (Versatile Video Coding). AVC, also known as "ITU-T H.264", was approved in 2003 and last revised 2021-08-22. HEVC, also known as "ITU-T H.265", was approved in 2013 and last revised 2023-09-13. AV1 is a video coding codec designed for video transmissions over the Internet. "AV1 Bitstream & Decoding Process Specification" version 1.1.1 with Errata was last modified in 2019. WC, also known as "ITU-T H.266", was finalized in 2020. While the techniques described herein relate to WC, it is envisioned by the disclosure that the techniques may be applied to other codecs having intra-prediction decisions that are the same or similar to the ones made in WC.

*Video compression*

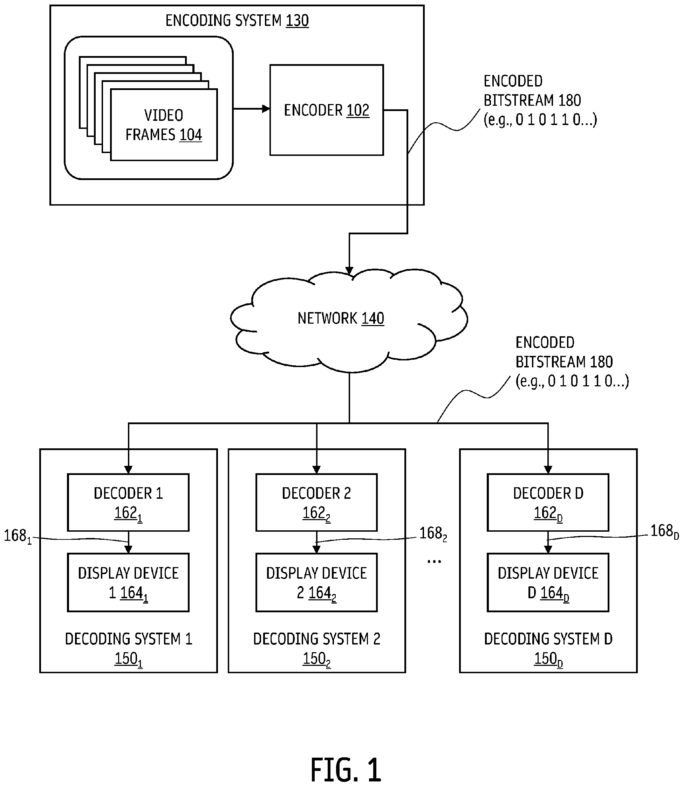

FIG. 1 illustrates encoding system 130 and one or more decoding systems $150_{1...D}$, according to some embodiments of the disclosure.

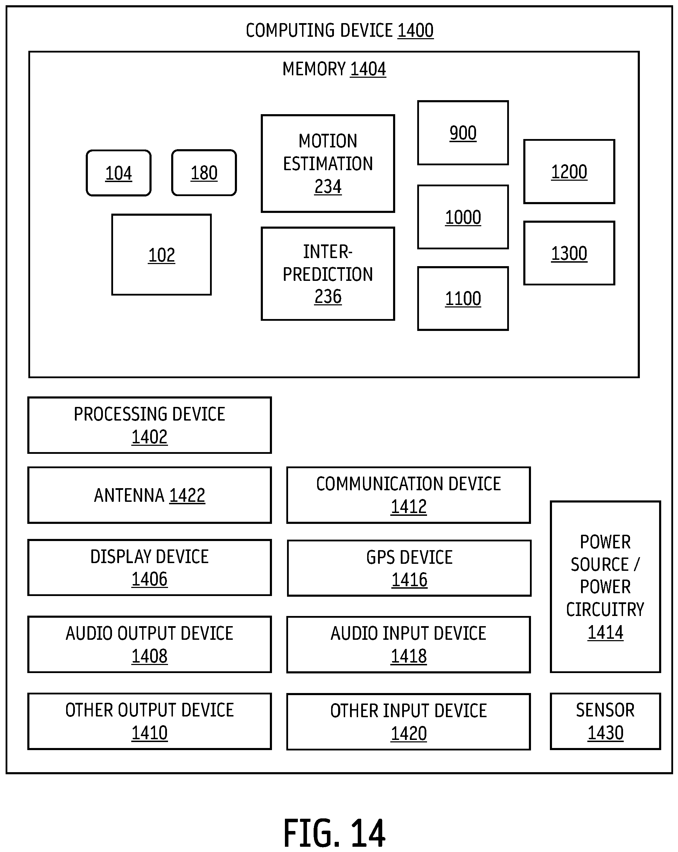

Encoding system 130 may be implemented on computing device 1400 of FIG. 14. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer-screen content, video conferencing content, live event broadcast content, sports content, a surveillance video, a video shot using a mobile computing device (e.g., a smartphone), etc. In some cases, video may include a mix or combination of different types of video.

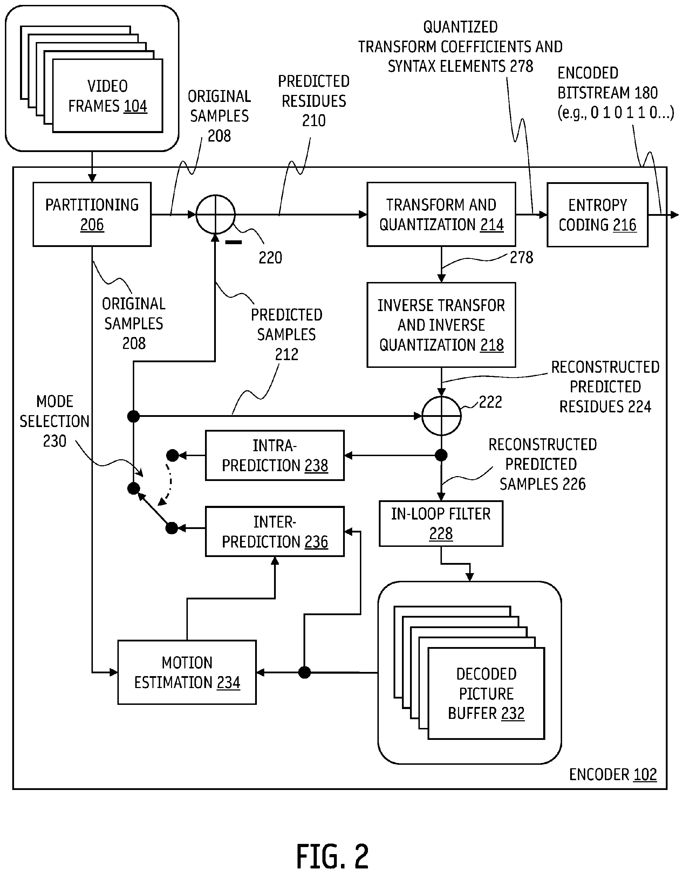

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems $150_{1...D}$, via network 140. Network 140 may be the Internet. Network 140 may include one or more of: cellular data networks, wireless data networks, wired data networks, cable Internet networks, fiber optic networks, satellite Internet networks, etc.

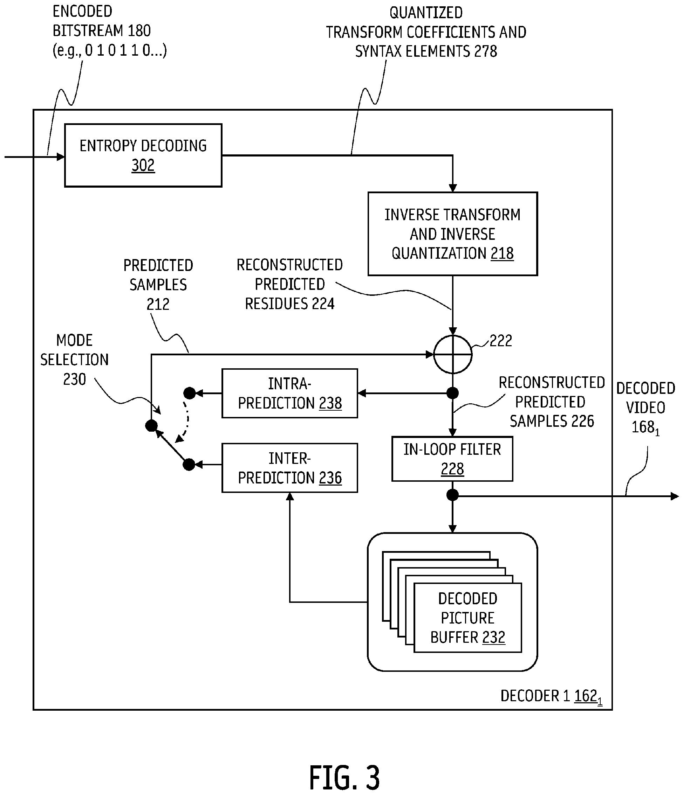

D number of decoding systems $150_{1...D}$ are illustrated. At least one of the decoding systems $150_{1...D}$ may be implemented on computing device 1400 of FIG. 14. Examples of systems $150_{1...D}$ may include personal computers, mobile computing devices, gaming devices, augmented reality devices, mixed reality devices, virtual reality devices, televisions, etc. Each one of decoding systems $150_{1...D}$ may perform the process of decoding in video compression. Each one of decoding systems $150_{1...D}$ may include a decoder (e.g., decoder 1...D $162_{1...D}$), and one or more display devices (e.g., display device 1...D $164_{1...D}$). An exemplary implementation of a decoder, e.g., decoder 1 $162_1$, is illustrated in FIG. 3.

For example, decoding system 1 $150_1$, may include decoder 1 $162_1$ and a display device 1 $164_1$. Decoder 1 $162_1$ may implement a decoding process of video compression. Decoder 1 $162_1$ may receive encoded bitstream 180 and produce decoded video $168_1$. Decoded video $168_1$ may include a series of video frames, which may be a version or reconstructed version of video frames 104 encoded by encoding system 130. Display device 1 $164_1$ may output the decoded video $168_1$ for display to one or more human viewers or users of decoding system 1 $150_1$.

For example, decoding system 2 $150_2$, may include decoder 2 $162_2$ and a display device 2 $164_2$. Decoder 2 $162_2$ may implement a decoding process of video compression. Decoder 2 $162_2$ may receive encoded bitstream 180 and produce decoded video $168_2$. Decoded video $168_2$ may include a series of video frames, which may be a version or reconstructed version of video frames 104 encoded by encoding system 130. Display device 2 $164_2$ may output the decoded video $168_2$ for display to one or more human viewers or users of decoding system 2 $150_2$.

For example, decoding system D $150_D$, may include decoder D $162_D$ and a display device D $164_D$. Decoder D $162_D$ may implement a decoding process of video compression. Decoder D $162_D$ may receive encoded bitstream 180 and produce decoded video $168_D$. Decoded video $168_D$ may include a series of video frames, which may be a version or reconstructed version of video frames 104 encoded by encoding system 130. Display device D $164_D$ may output the decoded video $168_D$ for display to one or more human viewers or users of decoding system D $150_D$.

*Video encoder*

FIG. 2 illustrates encoder 102 to encode video frames and output an encoded bitstream, according to some embodiments of the disclosure. Encoder 102 may include one or more of: signal processing operations and data processing operations, including inter and intra-prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-prediction 236, intra-prediction 238, and entropy coding 216.

Partitioning 206 may divide a frame in video frames 104 into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of 256x256 or 512x512 pixels. Large blocks may be referred to as superblocks, macroblocks, or CTBs. Partitioning 206 may further divide each large block using a multi-way partition tree structure. In some cases, a partition of a superblock can be recursively divided further by partitioning 206 using the multi-way partition tree structure (e.g., down to 4x4 size blocks/partitions). In another codec, a frame may be partitioned by partitioning 206 into CTUs of size 128x128 pixels. Partitioning 206 may divide a CTU using a quadtree partitioning structure into four CUs. Partitioning 206 may further recursively divide a CU using the quadtree partitioning structure. Partitioning 206 may (further) subdivide a CU using a multi-type tree structure (e.g., a quadtree, a binary tree, or ternary tree structure). A smallest CU may have a size of 4x4 pixels. A CU may be referred to herein as a block or a partition. Partitioning 206 may output original samples 208, e.g., as blocks of pixels, or partitions.

In WC, a frame in video frames 104 may be partitioned into a plurality of nonoverlapping CTUs. A CTU have a specified size, such as 128x128 pixels, or 64x64 pixels. The CTU can be recursively split into smaller blocks or partitions using different types of partitioning shapes. A CTU may be partitioned using a quadtree partitioning structure into 4 CUs. One or more of the CUs obtained through the quadtree partitioning structure can be recursively divided (e.g., up to three times) into smaller CUs using one of the multi-type structures, including, e.g., a quadtree, a binary tree, or ternary tree structure to support non-square partitions. A quadtree partitioning structure can partition a CU into 4 CUs. A binary tree partitioning structure can partition a CU into 2 CUs (e.g., divided horizontally or vertically). A ternary tree structure can partition a CU in to 3 CUs (e.g., divided horizontally or vertically). A smallest CU (e.g., referred to as a block or a partition) may have a size of 4x4 pixels. CUs may be larger than 4x4 pixels. It can be appreciated that a CTU may be partitioned into CUs through many different feasible partition combinations. A CTU may be partitioned in many different ways, resulting in many different partitioned results.

In some cases, one or more operations in partitioning 206 may be implemented in intra-prediction 238 and/or inter-prediction 236.

Intra-prediction 238 may predict samples of a block or partition from reconstructed predicted samples of previously encoded spatial neighboring/reference blocks of the same frame. Intra-prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-prediction 238 may determine a suitable predictor for predicting the samples from reconstructed predicted samples of previously encoded spatial neighboring/reference blocks of the same frame (thus making an intra-prediction decision). Intra-prediction 238 may generate predicted samples 212 generated using the suitable predictor. Intra-prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor. In one codec, intra-prediction 238 may support a number of diverse predictors, e.g., 56 different predictors. In one codec, intra-prediction 238 may support a number of diverse predictors, e.g., 95 different predictors. Some predictors, e.g., directional predictors, may capture different spatial redundancies in directional textures. Pixel values of a block can be predicted using a directional predictor in intra-prediction 238 by extrapolating pixel values of a neighboring/reference block along a certain direction. Intra-prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, intra-block copy, color palette, multiple-reference line, intra sub-partition, matrix-based intra-prediction (matrix coefficients may be defined by offline training using neural networks), angular prediction, wide-angle prediction, cross-component linear model, template matching, etc. In some cases, intra-prediction 238 may perform block-prediction, where a predicted block may be produced from a reconstructed neighboring/reference block of the same frame using a vector. Optionally, an interpolation filter of a certain type may be applied to the predicted block to blend pixels of the predicted block. Pixel values of a block can be predicted using a vector compensation process in intra-prediction 238 by translating a neighboring/reference block (within the same frame) according to the vector (and optionally applying an interpolation filter to the neighboring/reference block) to produce predicted samples 212. Intra-prediction 238 may output or identify the vector applied in generating predicted samples 212. In some codecs, intra-prediction 238 may encode (1) a residual vector generated from the applied vector and a vector predictor candidate, and (2) information that identifies the vector predictor candidate, rather than encoding the applied vector itself. Intra-prediction 238 may output or identify an interpolation filter type applied in generating predicted samples 212.

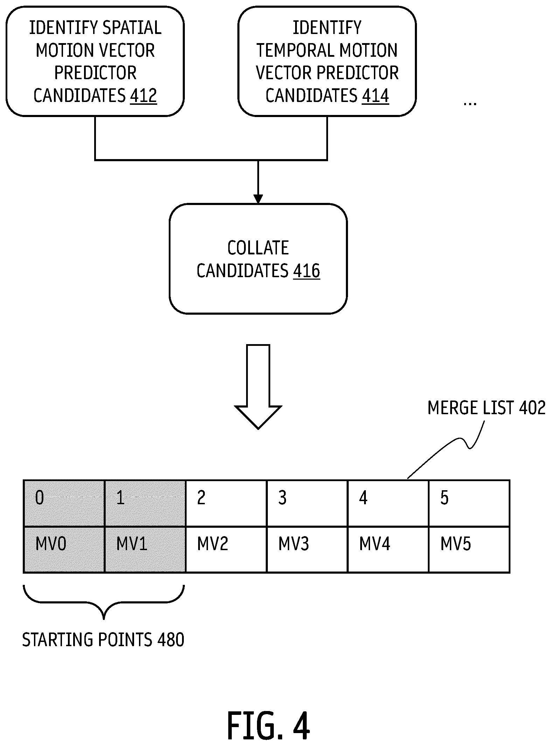

Motion estimation 234 and inter-prediction 236 may predict samples of a block from samples of previously encoded frames, e.g., reference frames in decoded picture buffer 232. Motion estimation 234 and inter-prediction 236 may perform operations to make inter-prediction decisions or inter-prediction decisions. Exemplary implementations and operations of motion estimation 234 and inter-prediction 236 are illustrated in FIGS. 4-13.

Motion estimation 234 may perform motion analysis and determine motion information for a current frame. Motion estimation 234 may determine a motion field for a current frame. A motion field may include motion vectors for blocks of a current frame. Motion estimation 234 may determine an average magnitude of motion vectors of a current frame. Motion estimation 234 may determine motion information, which may indicate how much motion is present in a current frame (e.g., large motion, very dynamic motion, small/little motion, very static).

Motion estimation 234 and inter-prediction 236 may perform motion compensation, which may involve identifying a suitable reference block and a suitable motion predictor (or motion vector predictor) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for inter-prediction 236. Motion estimation 234 may implement compound reference frame prediction mode where two reference frames with two corresponding motion predictors are used for inter-prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, inter-prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound inter-intra-prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and inter-prediction 236 and optionally applying an interpolation filter. In some cases, inter-prediction 236 may perform motion compensation, where a predicted block may be produced from a reconstructed reference block of a reference frame using the motion predictor/vector. Inter-prediction 236 may output or identify the motion predictor/vector applied in generating predicted samples 212. In some codecs, inter-prediction 236 may encode (1) a residual vector generated from the applied vector and a vector predictor candidate, and (2) information that identifies the vector predictor candidate, rather than encoding the applied vector itself. Inter-prediction 236 may output or identify an interpolation filter type applied in generating predicted samples 212.

Inter-prediction 236 may have one or more coding tools at its disposal for encoding a block using inter-prediction. Inter-prediction 236 may make an intra-prediction decision that chooses or selects an optimal coding tool to be used, e.g., using rate-distortion optimization. The coding tools may include different ways to encode a motion vector for a current block. One coding tool to encode a motion vector is regular merge mode, which involves encoding a motion vector using a merge list. Regular merge mode may suffer from inaccuracies due to differences between the current motion vector and the motion vector predictors in the merge list. Another coding tool to encode a motion vector is to encode a motion vector predictor (e.g., a reference to a decoded motion vector predictor in a merge list) and a motion vector residue (or residual motion vector). In some contexts, this coding tool is referred to as adaptive motion vector prediction (AMVP) mode. While AMVP can signal and encode the current motion vector more accurately, additional bits are used to encode the motion vector residue and the syntax elements in AMVP mode would incur larger bit rate cost. Another encoding tool to encode a motion vector is MMVD mode, which involves encoding a motion vector using a merge list and an MVD. Signaling scheme for encoding the MVD may be more efficient than encoding the motion vector residue itself. Therefore, MMVD mode may offer a solution that compromises accuracy and overhead. One downside of MMVD mode is that using MMVD mode can increase complexity in the encoder. FIGS. 4-7 illustrate how MMVD mode works.

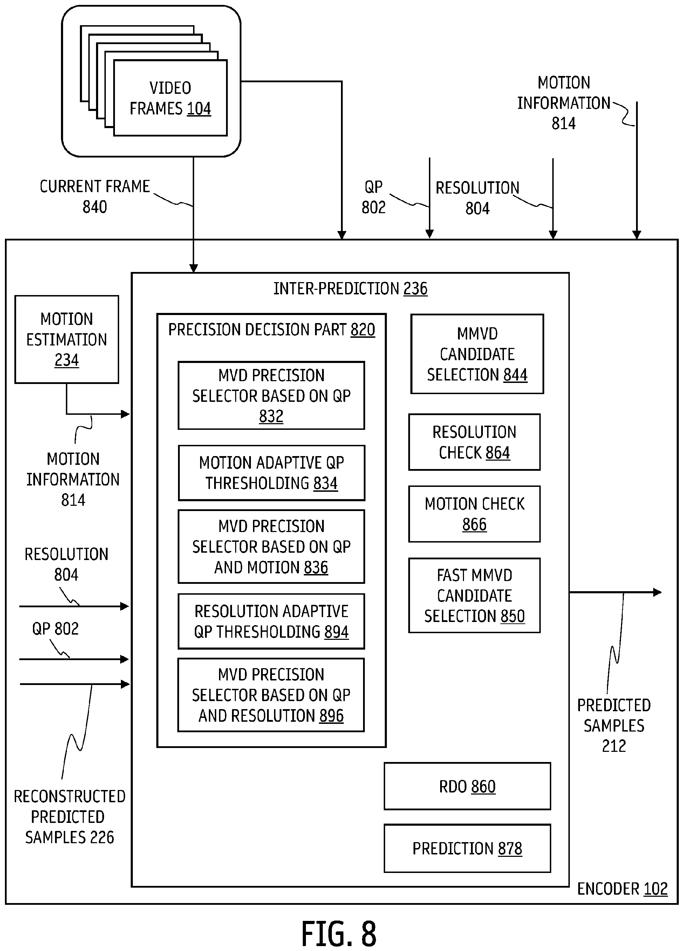

FIGS. 8-13 illustrate exemplary operations and implementations of inter-prediction 236 and approaches for reducing complexity in the encoder's inter-prediction decision making process.

Mode selection 230 may be informed by components such as motion estimation 234 to determine whether inter-prediction 236 or intra-prediction 238 may be more efficient for encoding a block (thus making an encoding decision). Inter-prediction 236 may output predicted samples 212 of a predicted block. Inter-prediction 236 may output a selected predictor and a selected interpolation filter (if applicable) that may be used to generate the predicted block. Intra-prediction 238 may output predicted samples 212 of a predicted block. Intra-prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from inter-prediction 236 and/or intra-prediction 238.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-prediction 238 and inter-prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of DCT, asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices). The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element in the quantization matrix and rounding to the nearest integer. Effectively, the quantization matrices may implement different quantization parameters (QPs) for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-prediction 236, and intra-prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of in-loop filters may include constrained low-pass filter, directional deringing filter, edge-directed conditional replacement filter, loop restoration filter, Wiener filter, self-guided restoration filters, constrained directional enhancement filter (CDEF), Luma Mapping with Chroma Scaling (LMCS) filter, Sample Adaptive Offset (SAO) filter, Adaptive Loop Filter (ALF), cross-component ALF, low-pass filter, deblocking filter, etc. For example, applying a deblocking filter across a boundary between two blocks can resolve blocky artifacts caused by the Gibbs phenomenon. In some embodiments, in-loop filter 228 may fetch data from a frame buffer having reconstructed predicted samples 226 of various blocks of a video frame. In-loop filter 228 may determine whether to apply an in-loop filter or not. In-loop filter 228 may determine one or more suitable filters that achieve good visual quality and/or one or more suitable filters that suitably remove the artifacts introduced by the encoding process in encoder 102. In-loop filter 228 may determine a type of an in-loop filter to apply across a boundary between two blocks. In-loop filter 228 may determine one or more strengths of an in-loop filter (e.g., filter coefficients) to apply across a boundary between two blocks based on the reconstructed predicted samples 226 of the two blocks. In some cases, in-loop filter 228 may take a desired bitrate into account when determining one or more suitable filters. In some cases, in-loop filter 228 may take a specified QP into account when determining one or more suitable filters. In-loop filter 228 may apply one or more (suitable) filters across a boundary that separates two blocks. After applying the one or more (suitable) filters, in-loop filter 228 may write (filtered) reconstructed samples to a frame buffer such as decoded picture buffer 232.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

*Video decoder*

FIG. 3 illustrates decoder 1 $162_1$ to decode an encoded bitstream and output a decoded video, according to some embodiments of the disclosure. Decoder 1 $162_1$ may include one or more of: signal processing operations and data processing operations, including entropy decoding, inverse transform, inverse quantization, inter and intra-prediction, in-loop filtering, etc. Decoder 1 $162_1$ may have signal and data processing operations that mirror the operations performed in the encoder. Decoder 1 $162_1$ may apply signal and data processing operations that are signaled in encoded bitstream 180 to reconstruct the video. Decoder 1 $162_1$ may receive encoded bitstream 180 and generate and output decoded video $168_1$ having a plurality of video frames. The decoded video $168_1$ may be provided to one or more display devices for display to one or more human viewers. Decoder 1 $162_1$ may include one or more of entropy decoding 302, inverse transform and inverse quantization 218, in-loop filter 228, inter-prediction 236, and intra-prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 $162_1$ such as mode selection 230, intra-prediction 238, inter-prediction 236, and in-loop filter 228.

Depending on the prediction modes signaled in the encoded bitstream 180 (e.g., as syntax elements in quantized transform coefficients and syntax elements 278), intra-prediction 238 or inter-prediction 236 may be applied to generate predicted samples 212.

Summer 222 may sum predicted samples 212 of a decoded reference block and reconstructed predicted residues 224 to produce reconstructed predicted samples 226 of a reconstructed block. For intra-prediction 238, the decoded reference block may be in the same frame as the block that is being decoded or reconstructed. For inter-prediction 236, the decoded reference block may be in a different (reference) frame in decoded picture buffer 232.

Intra-prediction 238 may determine a reconstructed vector based on a residual vector and a selected vector predictor candidate. Intra-prediction 238 may apply a reconstructed predictor or vector (e.g., in accordance with signaled predictor information) to the reconstructed block, which may be generated using a decoded reference block of the same frame. Intra-prediction 238 may apply a suitable interpolation filter type (e.g., in accordance with signaled interpolation filter information) to the reconstructed block to generate predicted samples 212.

Inter-prediction 236 may determine a reconstructed vector based on a residual vector and a selected vector predictor candidate. Inter-prediction 236 may apply a reconstructed predictor or vector (e.g., in accordance with signaled predictor information) to a reconstructed block, which may be generated using a decoded reference block of a different frame from decoded picture buffer 232. Inter-prediction 236 may apply a suitable interpolation filter type (e.g., in accordance with signaled interpolation filter information) to the reconstructed block to generate predicted samples 212.

In-loop filter 228 may receive reconstructed predicted samples 226. In-loop filter 228 may apply one or more filters signaled in the encoded bitstream 180 to the reconstructed predicted samples 226. In-loop filter 228 may output decoded video $168_1$.

### Merge mode with motion vector difference, or MMVD

As discussed with FIG. 2, inter-prediction 236 may evaluate a variety of coding tools that can most efficiently encode a current motion vector for a current block in a current frame. The coding tools may include AMVP mode, regular merge mode, and MMVD mode. The coding tools may use on a list of motion vector predictors or motion vector predictor candidates. Such a list may be referred to as a candidate list, a merge list, or a merge candidate list. Based on the list, a motion vector predictor that best represents or predicts the current motion vector can be identified using an index. The index may be signaled in the encoded bitstream to enable a decoder to reconstruct the current motion vector. The list enables spatio-temporal redundancy in motion vectors to be exploited.

FIG. 4 illustrates generation of a merge list and exemplary merge list 402, according to some embodiments of the disclosure. The generation of the merge list 402 may include, in 412, identifying (methodically according to a predetermined scheme) spatial motion vector predictor candidates. The spatial motion vector predictor candidates may include motion vectors of neighboring blocks of the current block. Redundant spatial motion vector predictor candidates may be removed. The generation of the merge list 402 may include, in 414, identifying (methodically according to a predetermined scheme) temporal motion vector predictor candidates. The temporal motion vector predictor candidates may include motion vectors of blocks in one or more neighboring frames of the current frame. Redundant temporal motion vector predictor candidates may be removed. In some cases, the generation of the merge list 402 may include identifying other types of motion vector candidates (e.g., combined bi-predictive merge candidate and zero motion candidate). The generation of the merge list 402 may include, in 416, collating candidates. The candidates may be added (methodically according to a predetermined scheme) to merge list 402. The candidates may be ordered in merge list 402 from the most likely to be chosen as the motion vector predictor to the least likely to be chosen as the most vector predictor. In some cases, the first two indices or candidates in merge list 402 may be the most likely ones to be chosen as the motion vector predictor.

Merge list 402 may be indexed, such that motion vector predictor candidates in the list may be referenced using the index (or bits that correspond to the index). In some cases, merge list 402 may have 4 candidates. In some cases, merge list 402 may have 6 candidates. In some cases, merge list 402 may have 8 candidates.

For MMVD mode, the motion vector is encoded as an MVD. An MVD encodes a motion vector predictor candidate and a motion vector residue (or residual motion vector) representing a difference between a current motion vector for a current block and the motion vector predictor candidate. The motion vector residue encoded in the MVD is an estimate of the motion vector residue.

MVD signaling may include one or more of: a merge candidate flag or bit, an index to specify the magnitude of the MVD, and an index to indicate the direction of the MVD. The signaling scheme for MVD is designed to ensure that a small number of bits can be used efficiently to identify a motion vector difference candidate out of a diverse set of motion vector difference candidates that best estimates the motion vector residue. More MVD candidates can mean that there is a better chance of being able to accurately encode a motion vector residue (or a residual motion vector). However, having more motion vector difference candidates to choose from can mean that many options for MVD would be evaluated to find an optimal MVD to encode the motion vector. Also, using MMVD mode adds overhead in the encoded bitstream (when compared to regular merge mode), and it is not trivial to be able to determine whether to enable MMVD mode or not.

The merge candidate flag/bit in MVD signaling is used to signal or indicate a starting point for the MVD, so that the MVD may specify an offset to be added to the indicated starting point. The starting point represents the motion vector predictor candidate to be used for reconstructing/predicting the current motion vector. In MMVD mode, the choice for a starting point is limited to using either the first motion vector predictor candidate at index 0 in merge list 402 or the second motion vector predictor candidate at index 1 in merge list 402. The first motion vector predictor candidate at index 0 in merge list 402 and the second motion vector predictor candidate at index 1 in merge list 402 may be referred to as the first starting point and the second starting point (shown as starting points 480). The merge candidate flag/bit may specify which starting point is used. A value of 0 for the merge candidate flag/bit may indicate that the first motion vector predictor candidate at index 0 in merge list 402 is to be used as the starting point. A value of 1 for the merge candidate flag/bit may indicate that the second motion vector predictor candidate at index 0 in merge list 402 is to be used as the starting point. There are two starting points to choose from.

The index to specify the magnitude of the MVD in MVD signaling is used to signal or indicate a magnitude of the MVD. The magnitude of the MVD may indicate a distance from the chosen starting point. The magnitude of the MVD may indicate an offset to be added to the chosen starting point to reconstruct/predict the current motion vector from the chosen starting point. The offset may be added to a horizontal component of the chosen starting point (e.g., depending on the direction index). The offset may be added to a vertical component of the chosen starting point (e.g., depending on the direction index). The magnitude of the MVD may indicate a difference between the current motion vector and the chosen starting point. The magnitude of the MVD may be measured in terms of pixels. The magnitude may be defined in fractional precision (e.g., in quarter pel), or in integer precision (e.g., in full/integer pel).

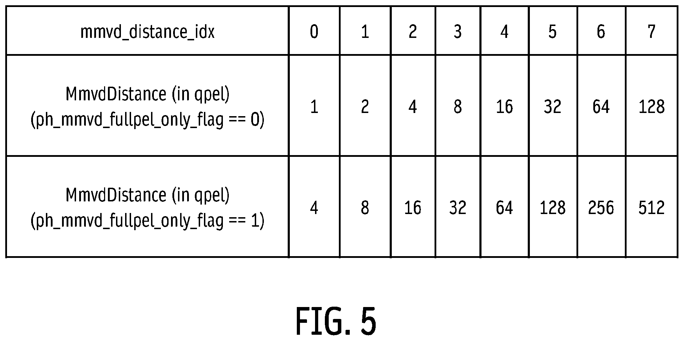

FIG. 5 depicts a table of magnitude indices and corresponding magnitudes, according to some embodiments of the disclosure. 8 different indices, mmvd_distance_idx, may be used to specify the different magnitudes. There are 8 available magnitudes to choose from. The magnitudes may be powers of two. The magnitudes shown in the table are in quarter pel or qpel. If ph_mmvd_fullpel_only_flag in a picture header or frame header is 0, the 8 different indices, mmvd_distance_idx, would correspond to the fractional pel offsets (e.g., 1 qpel, 2 qpel, 4 qpel, ... and 128 qpel). If ph_mmvd_fullpel_only_flag in a picture header or frame header is 1, the 8 different indices, mmvd_distance_idx, would correspond to the integer pel offsets (e.g., 4 qpel, 8 qpel, 16 qpel, ... and 512 qpel). ph_mmvd fullpel only_flag can specify the precision to be used (e.g., fractional precision or integer precision) at the picture level or frame level. There are 8 available magnitudes to choose from.

The index to specify the direction of the MVD in MVD signaling is used to signal or indicate a direction of the MVD relative to the chosen starting point. The direction of the MVD may indicate whether to add or subtract the magnitude/offset to the horizontal component, or to add or subtract the magnitude /offset to the vertical component. 4 different indices, mmvd_direction_idx, may be used to specify the different directions. There are 4 available directions to choose from.

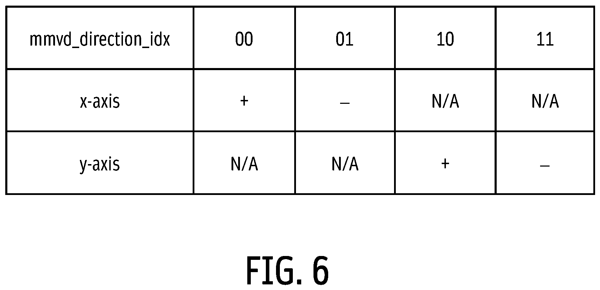

FIG. 6 depicts a table of direction indices and corresponding directions, according to some embodiments of the disclosure. 4 different indices, mmvd_direction_idx, may be used to specify the different directions. There are 4 available directions to choose from. If mmvd_direction_idx is 00, then the magnitude specified by mmvd_distance_idx, is added to the horizontal component (e.g., x-axis) of the starting point specified by merge candidate flag/bit, as denoted by "+". If mmvd_direction_idx is 01, then the magnitude specified by mmvd_distance_idx, is subtracted from the horizontal component (e.g., x-axis) of the starting point specified by merge candidate flag/bit, as denoted by "-". If mmvd_direction_idx is 10, then the magnitude specified by mmvd_distance_idx, is added to the vertical component (e.g., y-axis) of the starting point specified by merge candidate flag/bit, as denoted by "+". If mmvd_direction_idx is 11, then the magnitude specified by mmvd_distance_idx, is subtracted from the vertical component (e.g., y-axis) of the starting point specified by merge candidate flag/bit, as denoted by "-".

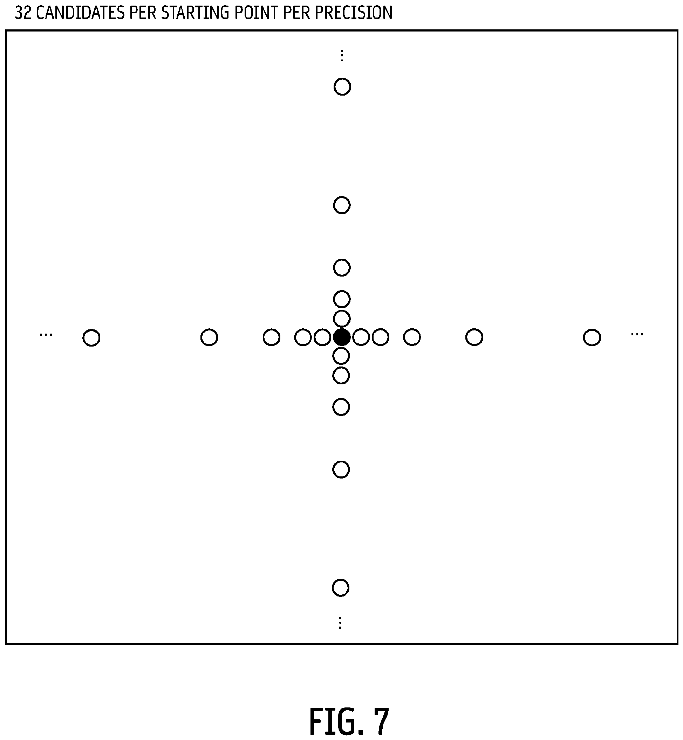

FIG. 7 illustrates a search space for a starting point, according to some embodiments of the disclosure. MMVD has a significant search space for inter-prediction 236 of FIG. 2 to consider and evaluate. As illustrated in FIGS. 5-7, there are many MVD candidates to consider. For a given starting point and a decided precision, there may be 32 combinations of 8 magnitudes and 4 directions to evaluate (8x4=32). For two possible starting points (e.g., the first motion vector predictor candidate at index 0 in the merge list or the second motion vector predictor candidate at index 1 in merge list), there may be twice as many combinations, e.g., 64 combinations to evaluate (2x8x4=64).

*Efficient inter-prediction implementation and inter-prediction decision processes*

FIG. 8 illustrates inter-prediction 236 in encoder 102, according to some embodiments of the disclosure.

Inter-prediction 236 may include prediction 878, which may apply a selected inter-prediction mode to reconstructed predicted samples 226 to generate predicted samples 212. Reconstructed predicted samples 226 may include reference samples, and the selected inter-prediction mode may be applied to the reference samples to produce predicted samples 212.

Inter-prediction 236 may receive video frames 104. Inter-prediction 236 may receive a current frame 840 to be encoded. Inter-prediction 236 may determine an amount of distortion resulting from applying an available inter-prediction option or mode by comparing the results from applying the option or mode with current frame 840.

Inter-prediction 236 may receive QP 802. QP 802 may be a QP specified for a given frame or picture, such as current frame 840. QP 802 may be determined or specified by an encoding application, based on one or more target requirements for encoding video frames 104. QP 802 may be determined or specified by quantization 214 of FIG. 2. QP 802 may be determined based on a bitrate control component in encoder 102.

Inter-prediction 236 may receive a current frame 840 to be encoded and motion information 814 associated with current frame 840. Motion information 814 may be provided by one or more components or parts in encoder 102 of FIG. 2 (e.g., motion estimation 234). Motion information 814 may be determined by one or more components or parts in encoder 102 of FIG. 2 (e.g., motion estimation 234). Motion information 814 may be provided by and/or determined by a component that analyzes motion in video frames 104. Motion information 814 may be provided by and/or determined by a component that identify segments or scene changes in video frames 104. Motion information 814 may be provided or specified by a user of encoder 102. Motion information 814 may include a quantitative measure of motion in current frame 840 (e.g., an average magnitude of motion vectors of current frame 840, a statistic about the motion field of current frame 840, movement of objects in current frame 840, etc.). Motion information 814 may include a motion classification of current frame 840 (e.g., large/high motion, rapid motion, medium motion, little/low motion, very static, high speed motion, slow motion, etc.) that indicates an amount of motion in current frame 840. Motion information 814 may be derived from content classification or type of current frame 840 (e.g., video game content, computer-screen content, video conferencing content, live sports content, entertainment content, live webcam content, etc.)

Inter-prediction 236 may receive a current frame 840 to be encoded and resolution 804 associated with current frame 840. Resolution 804 may be provided or specified by a user of encoder 102. Resolution 804 may be determined from video frames 104. Resolution 804 may be determined based on one or more target requirements for encoding video frames 104. Resolution 804 may define a size of current frame 840 in pixels (e.g., width in pixels and height in pixels).

Inter-prediction 236 may include precision decision part 820. For MMVD mode, the precision of the MVD may be decided at a frame level or picture level. In other words, the precision may be decided on a frame by frame basis, e.g., for current frame 840. The selected precision may be used for encoding (all) motion vectors of (all) blocks of current frame 840. Precision decision part 820 may select a precision, from a fractional precision (e.g., quarter pel) and an integer precision (e.g., full/integer pel) for encoding motion vectors, e.g.., a current motion vector of a block in current frame 840. Precision decision part 820 may either select fractional precision or integer precision. Precision decision part 820 may determine the precision to be used for encoding the MVD magnitude/distance (e.g., as illustrated in the table depicted in FIG. 5). The decision on precision can impact the search for MVD candidates. Phrased differently, the set of MVD candidates would be limited to the selected precision. If precision decision part 820 selects fractional precision as the selected precision, ph_mmvd_fullpel_only_flag at the frame level or picture level may be set to 0. If precision decision part 820 selects integer precision as the selected precision, ph_mmvd_fullpel_only_flag at the frame level or picture level may be set to 1.

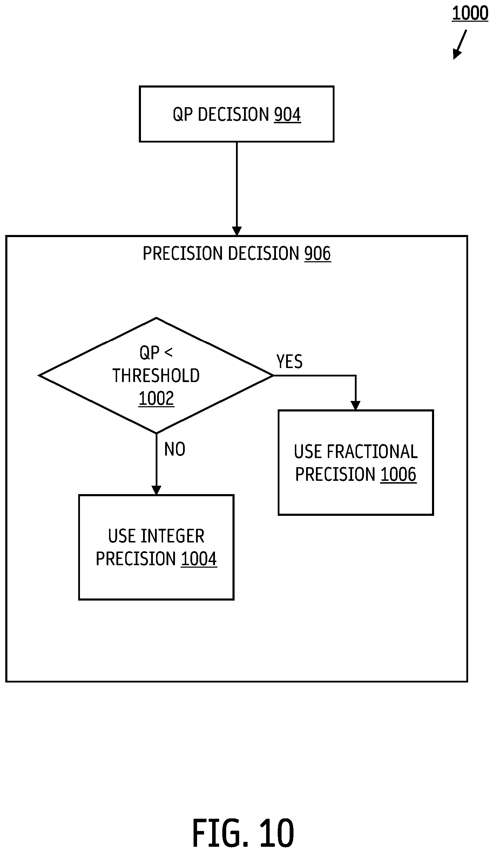

Exemplary operations in precision decision part 820 are illustrated in FIGS. 10-12.

Precision decision part 820 may include one or more components which may select the precision based on QP 802. One insight behind the implemented solutions was that the optimal MVD precision is correlated with the quality of reference frames. The quality of reference frames is determined by QP 802 in most circumstances. Therefore, MVD precision can be optimally decided based on QP 802. Phrased differently, MVD precision can adapt to QP 802.

In some embodiments, precision decision part 820 includes MVD precision selector based on QP 832. MVD precision selector based on QP 832 may select a precision, from a fractional precision and an integer precision for encoding a current motion vector of a block in a current frame 840 based on a quantization parameter of the current frame. In some embodiments, MVD precision selector based on QP 832 may compare QP 802 against a threshold. MVD precision selector based on QP 832 may determine whether QP 802 is less than the threshold. If QP 802 is less than the threshold (indicating current frame 840 is a high quality frame), MVD precision selector based on QP 832 may select fractional precision as the selected precision. If QP 802 is greater than or equal to the threshold (indicating current frame 840 is a low quality frame), MVD precision selector based on QP 832 may select integer precision as the selected precision. Exemplary operations in precision decision part 820 involving MVD precision selector based on QP 832 are illustrated in FIGS. 10-12.

Besides QP 802, motion information 814 may be utilized in selecting an optimal precision. Precision decision part 820 may determine or select the precision further based on motion information 814 of current frame 840. Phrased differently, MVD precision can adapt to motion information 814. If current frame 840 has large motion, it might be optimal to select integer precision, since the MVD candidates with integer precision may capture larger magnitude MVDs. If current frame 840 is static or has little motion, it might be optimal to select fractional precision, since the MVD candidates with fractional precision may capture smaller magnitude MVDs.

In some embodiments, resolution 804 may be utilized in selecting an optimal precision. Precision decision part 820 may determine or select the precision further based on resolution 804 of current frame 840. Phrased differently, MVD precision can adapt to resolution 804. If current frame 840 has large resolution (e.g., resolution 804 is less than a resolution threshold), it might be optimal to select integer precision, since motion vectors in large resolution video are likely larger in magnitude and the MVD candidates with integer precision may capture larger magnitude MVDs. If current frame 840 has small resolution (e.g., resolution 804 is greater than or equal to a resolution threshold), it might be optimal to select integer precision, since motion vectors in small resolution video are likely smaller in magnitude and the MVD candidates with fractional precision may capture smaller magnitude MVDs.

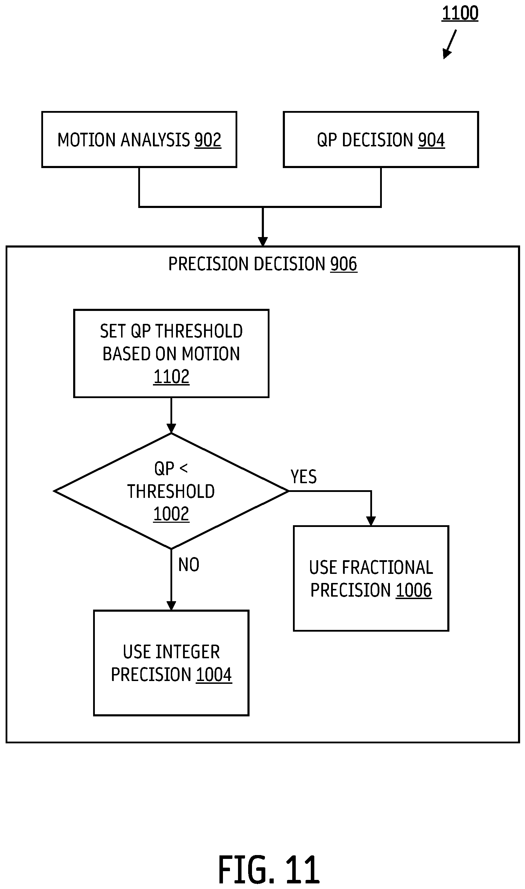

In some embodiments, precision decision part 820 includes motion adaptive QP thresholding 834. Motion adaptive QP thresholding 834 may adjust the threshold against which QP 832 is compared to select the appropriate precision. In some embodiments, motion adaptive QP thresholding 834 may use a smaller threshold if current frame 840 has large motion. Using a smaller threshold would mean that QP 832 has to be small (very high quality) to trigger using fractional precision for a frame with large motion, otherwise, integer precision is used to capture larger magnitude MVDs. In some embodiments, motion adaptive QP thresholding 834 may use a larger threshold if current frame 840 is static or has little motion. Using a larger threshold would mean that QP 832 has to be big (low quality) to trigger using integer precision for a frame that is static with little motion, otherwise, fractional precision is used to capture smaller magnitude MVDs. Motion adaptive QP thresholding 834 may set the threshold based on motion information 814 of current frame 840. Motion adaptive QP thresholding 834 may determine whether motion information 814 indicates large motion. In response to determining that the motion information indicates large motion, motion adaptive QP thresholding 834 may set the threshold to a first value. In response to determining that the motion information does not indicate large motion, motion adaptive QP thresholding 834 may set the threshold to a second value. The second value can be greater than the first value. Exemplary operations in precision decision part 820 involving motion adaptive QP thresholding 834 are illustrated in FIG. 11.

In some embodiments, precision decision part 820 includes resolution adaptive QP thresholding 894. Resolution adaptive QP thresholding 894 may adjust the threshold against which QP 832 is compared to select the appropriate precision. In some embodiments, resolution adaptive QP thresholding 894 may use a smaller threshold if resolution 804 has a large resolution. Using a smaller threshold would mean that QP 832 has to be small (very high quality) to trigger using fractional precision for a frame with large resolution, otherwise, integer precision is used to capture larger magnitude MVDs. In some embodiments, resolution adaptive QP thresholding 894 may use a larger threshold if resolution 804 has a small resolution. Using a larger threshold would mean that QP 832 has to be big (low quality) to trigger using integer precision for a frame that has a small resolution, otherwise, fractional precision is used to capture smaller magnitude MVDs. Resolution adaptive QP thresholding 894 may set the threshold based on resolution 804 of current frame 840. Resolution adaptive QP thresholding 894 may determine whether resolution 804 is larger than a resolution threshold. In response to determining that the resolution 804 is larger than the resolution threshold, resolution adaptive QP thresholding 894 may set the threshold to a first value. In response to determining that resolution 804 is smaller than or equal to the resolution threshold, resolution adaptive QP thresholding 894 may set the threshold to a second value. The second value can be greater than the first value.

In some embodiments, motion adaptive QP thresholding 834 and resolution adaptive QP thresholding 894 may be combined to adapt the QP threshold based on both motion information 814 and resolution 804 together.

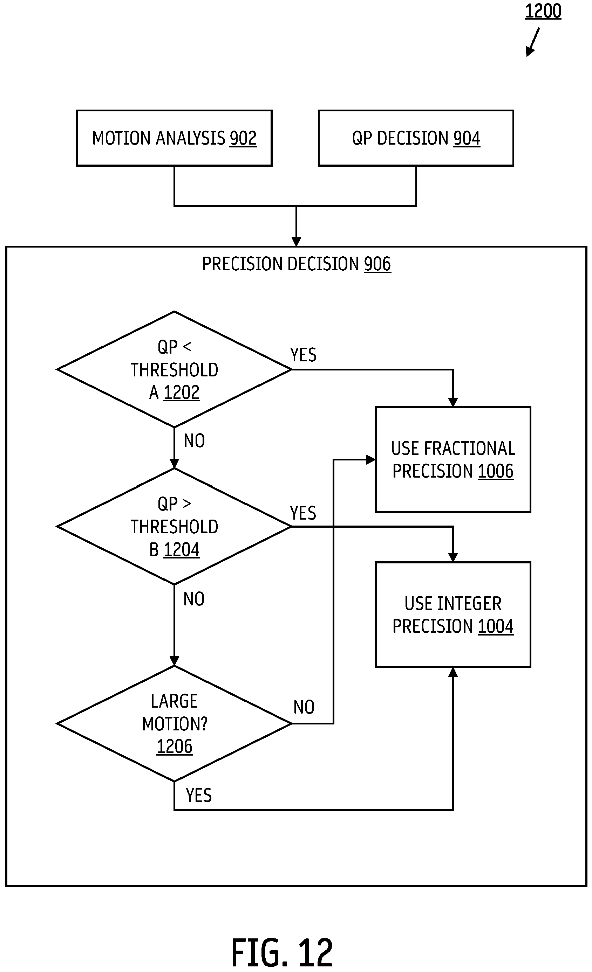

In some embodiments, precision decision part 820 includes MVD precision selector based on QP and motion 836. MVD precision selector based on QP and motion 836 may decide using QP 802 whether QP 802 is in a low range, in a high range, or somewhere in the middle range. If QP 802 is in a low range (very high quality frame), then fractional precision is used. If QP 802 is in a high range (very low quality frame), then integer precision is used. If QP 802 is somewhere in the middle range (medium quality frame), then motion information 814 is used to select the precision. If motion information 814 indicates large motion, then integer precision is selected. If motion information 814 indicates low/little motion, then fractional precision is selected. MVD precision selector based on QP and motion 836 can determine whether QP 802 is less than threshold A. This determination classifies whether QP 802 is in the low range. In response to determining that QP 802 is less than the threshold A, MVD precision selector based on QP and motion 836 may select the fractional precision as the selected precision. MVD precision selector based on QP and motion 836 may determine whether QP 802 is greater than threshold B. Threshold B is greater than threshold A. This determination classifies whether QP 802 is in the high range. In response to determining that QP 802 is greater than threshold B, MVD precision selector based on QP and motion 836 may select the integer precision as the selected precision. Otherwise, or in response to determining that QP 802 is greater than or equal to threshold A and less than or equal to threshold B (this determination classifies whether QP 802 is in the middle range), MVD precision selector based on QP and motion 836 can determine whether motion information 814 of the current frame 840 indicates large motion. MVD precision selector based on QP and motion 836, in response to determining that motion information 814 indicates large motion, can select the integer precision as the selected precision. MVD precision selector based on QP and motion 836, in response to determining that motion information 814 does not indicate large motion, can select the fractional precision as the selected precision. Exemplary operations in precision decision part 820 involving MVD precision selector based on QP and motion 836 are illustrated in FIG. 12.

In some embodiments, precision decision part 820 includes MVD precision selector based on QP and resolution 896. MVD precision selector based on QP and resolution 896 may decide using QP 802 whether QP 802 is in a low range, in a high range, or somewhere in the middle range. If QP 802 is in a low range (very high quality frame), then fractional precision is used. If QP 802 is in a high range (very low quality frame), then integer precision is used. If QP 802 is somewhere in the middle range (medium quality frame), then resolution 804 is used to select the precision. If resolution 804 is greater than a resolution threshold, then integer precision is selected. If resolution 804 is smaller than or equal to the resolution threshold, then fractional precision is selected. MVD precision selector based on QP and resolution 896 can determine whether QP 802 is less than threshold A. This determination classifies whether QP 802 is in the low range. In response to determining that QP 802 is less than the threshold A, MVD precision selector based on QP and resolution 896 may select the fractional precision as the selected precision. MVD precision selector based on QP and resolution 896 may determine whether QP 802 is greater than threshold B. Threshold B is greater than threshold A. This determination classifies whether QP 802 is in the high range. In response to determining that QP 802 is greater than threshold B, MVD precision selector based on QP and resolution 896 may select the integer precision as the selected precision. Otherwise, or in response to determining that QP 802 is greater than or equal to threshold A and less than or equal to threshold B (this determination classifies whether QP 802 is in the middle range), MVD precision selector based on QP and resolution 896 can determine whether resolution 804 of the current frame 840 is greater than a resolution threshold. MVD precision selector based on QP and resolution 896, in response to determining that resolution 804 is greater than the resolution threshold, can select the integer precision as the selected precision. MVD precision selector based on QP and resolution 896, in response to determining that resolution 804 is smaller than or equal to the resolution threshold, can select the fractional precision as the selected precision.

In some embodiments, MVD precision selector based on QP and motion 836 and MVD precision selector based on QP and resolution 896 may be combined to select a precision based on both motion information 814 and resolution 804 together.

Inter-prediction 236 may include RDO 860 to perform rate-distortion optimization when making inter-prediction decision. RDO determines a trade-off between the bitrate (e.g., a compression rate), and the distortion (e.g., quality, objective quality, subjective quality, etc.) introduced by the compression process. The goal of RDO is to make an optimal encoding decision (in this case, one or more inter-prediction decisions) that minimizes a rate-distortion cost function that balances bitrate and distortion in the following equation:

$$Cost = distortion + \lambda * bitrate \qquad \textbf{(equation 1)}$$

*Cost* represents the rate-distortion cost. *distortion* represents the distortion (e.g., mean squared error, sum of absolute differences, objective quality loss, subjective quality loss, etc.). *bitrate* represents the bitrate, or a number of bits to encode the data. $\lambda$ or lambda is an RDO parameter (sometimes referred to as the Lagrangian multiplier) that can control or adjust the relative importance of bitrate versus distortion in the rate-distortion cost function. A higher value for $\lambda$ means more emphasis on reducing the bitrate. A lower value for $\lambda$ means more emphasis on reducing distortion.

RDO 860 in inter-prediction 236 may determine a plurality of RD costs (e.g., according to equation 1) to evaluate different options/modes for encoding the frame, including the current motion vector for the block in current frame 840. RDO 860 may determine an option, or make an inter-prediction decision (on how to encode the motion vector) based on the RD costs. RDO 860 may determine the inter-prediction decision by selecting the option/mode/inter-prediction decision that has a lowest RD cost. Prediction 878 may then apply the inter-prediction decision on reconstructed predicted samples 226 to output predicted samples 212. Encoder 102 may encode the current motion vector of the block in an encoded bitstream according to the inter-prediction decision.

RDO 860 may evaluate different options/modes. Examples of different options/modes may include: AMVP mode, regular merge mode, and MMVD mode. RDO 860 may decide whether to use regular merge mode, or enable MMVD (or use MMVD mode). For regular merge mode, there may be additional options to evaluate, including the different motion vector predictors in the merge list. For MMVD mode, there may be additional options to evaluate, including the 64 different MVD candidates to choose from. The abundance of options can make it impractical for RDO 860 to compute RD costs on all the options, including all 64 possible MVD candidates.

To reduce complexity in RDO 860, inter-prediction 236 may compute prediction costs for the MVD candidates (first) before RDO 860 would perform RDO using the best MVD candidate (e.g., lowest prediction cost MVD candidate) to decide if MMVD mode should be enabled to encode the motion vector. Complexity in RDO 860 may be reduced by limiting the number of options that RDO 860 would need to consider. Inter-prediction 236 includes MMVD candidate selection 844 to determine one or more MVD candidates based on the selected precision, determine one or more prediction costs for the one or more MVD candidates, and select a MVD candidate based on the one or more prediction costs. MMVD candidate selection 844 may determine the MVD candidates based on the selected precision, one or more motion vector starting points (e.g., two motion vector starting points), one or more available magnitudes (e.g., up to 8 available magnitudes with a selected precision), and one or more available directions (e.g., up to 4 available directions). MMVD candidate selection 844 may select the MVD candidate having a lowest prediction cost.

MMVD candidate selection 844 reduces complexity for RDO 860 by implementing an efficient approach for evaluating and reviewing the MVD candidates using a measure of distortion by computing different prediction costs for the different MVD candidates, and then selecting one or more MVD candidates that have lower prediction costs to proceed with RDO in RDO 860. A prediction cost, not to be confused with the rate-distortion cost as illustrated by equation 1, may include a measure of distortion or dissimilarity/difference between the original samples and predicted samples. Examples of the measure of distortion or dissimilarity/difference can include a sum of absolute differences (SAD), sum of absolute transformed differences (SATD), a combination of SAD and SATD, a combination of SAD and a bias term associated with the MVD magnitude, a combination of SATD and a bias term associated with the MVD magnitude, and a combination of SAD, SATD, and a bias term associated with the MVD magnitude. In some embodiments, the combination may be a weighted sum.

To compute SAD, a MVD candidate can be applied to reference samples to determine predicted samples. The sum of absolute differences between the original samples (original block) and the predicted samples (predicted block) may be calculated as SAD for the MVD candidate.

To compute SATD, the MVD can be applied to reference samples to determine predicted samples. The absolute differences between the original samples (original block) and the predicted samples (predicted block) may be calculated. The absolute differences may be transformed using, e.g., a Hadamard Transform, or other suitable frequency domain transform. The sum of the transformed absolute differences may be calculated as SATD for the MVD candidate.

The bias term, if used, may be determined based on the MVD magnitude of the MVD candidate. The bias term may be determined by looking up the value for the bias term in a look up table using the MVD magnitude. The bias term may be an additive term in the calculation of the prediction cost.

In some scenarios, MMVD candidate selection 844 may determine sixty four MVD candidates based on combinations of two motion vector starting points, eight available magnitudes, and four available directions (e.g., as illustrated by the search space illustrated in FIG. 7).

In some scenarios, fewer MVD candidates may be reviewed (thus fewer prediction costs may be calculated) to reduce computations in inter-prediction 236. In otherwords, the search space illustrated in FIG. 7 may be reduced to a smaller search space in certain scenarios. For example, the search space may be reduced by half by limiting MVD candidates to 4 available magnitudes at mmvd_distance_idx at 0 to 3. In another example, the search space may be reduced by a quarter by limiting MVD candidates to 2 available magnitudes at mmvd_distance_idx at 0 to 1. The limitations on the search space (by limiting the MVD magnitudes to the smaller magnitudes) may be tolerable in scenarios where MVD is not expected to be very large in magnitude. The scenarios can be identified using resolution 804 and/or motion information 814. In some embodiments, the scenarios may be identified using both resolution 804 and motion information 814. An example of a scenario may include current frame 840 being a low resolution frame. An example of a scenario may include current frame 840 being a low motion frame. An example of a scenario may include current frame 840 being a low resolution frame and a low motion frame.

In some embodiments, inter-prediction 236 may include fast MMVD candidate selection 850. Fast MMVD candidate selection 850 differs from MMVD candidate selection 844 in that fast MMVD candidate selection 850 determines a limited set of MVD candidates, e.g., 32 MVD candidates based on combinations of two motion vector starting points, four available magnitudes, and four available directions. Prediction costs would be computed for the limited set of MVD candidates to reduce computations. In some cases, the limited set of MVD candidates may include 16 MVD candidates based on combinations of two motion vector starting points, two available magnitudes, and four available directions.

Inter-prediction 236 may include resolution check 864 to identify scenarios where the limited set of MVD candidates are to be determined by fast MMVD candidate selection 850, or scenarios where the full set of MVD candidates are to be determined by MMVD candidate selection 844. Resolution check 864 may determine whether resolution 804 is smaller than a predetermined resolution (threshold). In response to determining that resolution 804 is smaller than the predetermined resolution, fast MMVD candidate selection 850 may determine a limited set of MVD candidates. In response to determining that resolution 804 is larger than the predetermined resolution, MMVD candidate selection 844 may determine a full set of MVD candidates.

Inter-prediction 236 may include motion check 866 to identify scenarios where the limited set of MVD candidates are to be determined by fast MMVD candidate selection 850, or scenarios where the full set of MVD candidates are to be determined by MMVD candidate selection 844. Motion check 866 may determine whether motion information 814 indicates current frame 840 has large motion. In response to determining that motion information 814 indicates current frame 840 has large motion, MMVD candidate selection 844 may determine a full set of MVD candidates. In response to determining motion information 814 does not indicate current frame 840 has large motion, fast MMVD candidate selection 850 may determine a limited set of MVD candidates.

In some embodiments, resolution check 864 and motion check 866 may jointly determine the scenarios where the limited set of MVD candidates are to be determined by fast MMVD candidate selection 850, or scenarios where the full set of MVD candidates are to be determined by MMVD candidate selection 844. In response to determining that motion information 814 indicates current frame 840 has large motion and high resolution, MMVD candidate selection 844 may determine a full set of MVD candidates. In response to determining motion information 814 indicates current frame 840 is static and has low resolution, fast MMVD candidate selection 850 may determine a limited set of MVD candidates.

In some embodiments, the prediction costs calculated by MMVD candidate selection 844 and/or fast MMVD candidate selection 850 includes one or more SATDs between original samples of the current block and predicted samples of the current block generated using a corresponding MVD candidate.

Implementing MMVD candidate selection 844 and/or fast MMVD candidate selection 850 in inter-prediction 236 thus greatly reduce the complexity for RDO 860 by reducing the number of options to be evaluated by RDO 860. RDO 860 can apply the RDO process on the MMVD mode with the selected candidate from MMVD candidate selection 844 and/or fast MMVD candidate selection 850, and compare the MMVD cost against one or more other options or modes (e.g., AMVP mode, regular merge mode, etc.). One of the RD costs evaluated by RDO 860 includes a first rate-distortion cost associated with using the selected MVD candidate from MMVD candidate selection 844 and/or fast MMVD candidate selection 850. One of the RD costs evaluated by RDO 860 includes a second rate-distortion cost associated with using a merge list of motion vectors (e.g., regular merge mode). RDO 860 can compare whether the first RD cost is lower or the second RD cost is lower to determine whether to enable MMVD mode or use regular merge mode. RDO 860 may enable MMVD mode if the first RD cost is the lowest among all the other RD costs evaluated in RDO 860.

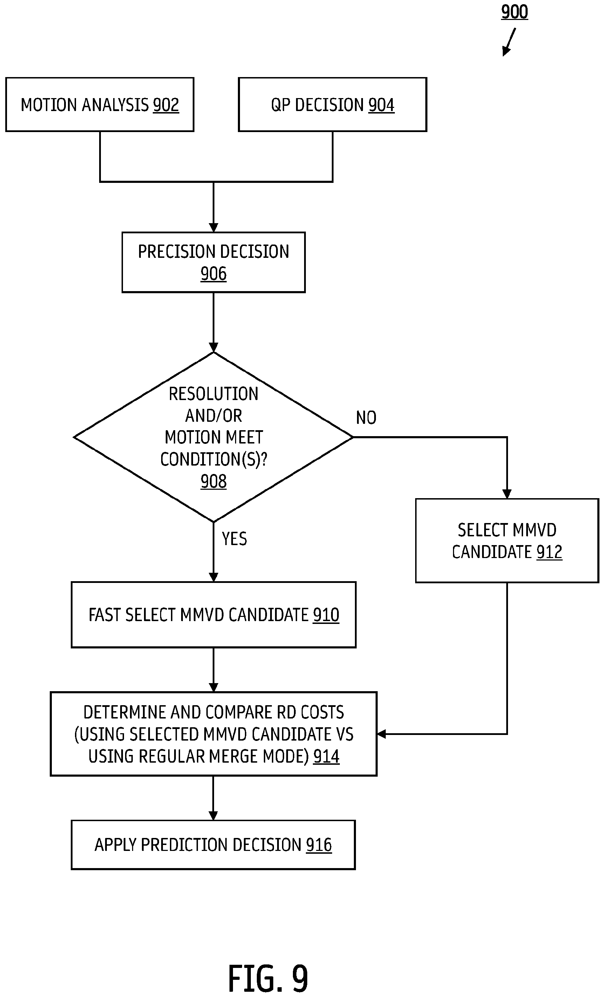

FIG. 9 illustrates an inter-prediction decision process 900, according to some embodiments of the disclosure. Process 900 may be performed by one or more components in inter-prediction 236 of FIG. 8. One or more operations of process 900 may be encoded as instructions on memory 1404, which can be executed by processing device 1402 to carry out the one or more operations of process 900.

In 902, a current frame may be analyzed for motion information.

In 904, a quantization parameter for the current frame may be decided or determined.

In 906, MVD precision may be decided, based on one or more of quantization parameter and motion information. In some embodiments, one or more components in precision decision part 820 of FIG. 8 may decide the precision.

In 908, one or more of resolution and motion information may be checked against one or more conditions. In some embodiments, one or more of resolution check 864 and motion check 866 of FIG. 8 may check for the one or more conditions. If the one or more conditions are met, the current frame may be a low resolution frame. If the one or more conditions are met, the current frame may be a low motion frame. If the one or more conditions are met, the current frame may be a low motion and low resolution frame. If the one or more conditions are met, process 900 may proceed via the "YES" path from 908 to 910. If none of the conditions are met, process 900 may proceed via the "NO" path from 908 to 910. In some embodiments, 908 and subsequent parts of process 900 that follows the "YES" path such as 910 from 908 may be optional.

In 912, an optimal MVD candidate may be selected from a set of MVD candidates for MMVD mode. In some embodiments, MMVD candidate selection 844 of FIG. 8 may select an MVD candidate with a lowest prediction cost.

In 910, an optimal MVD candidate may be selected from a reduced or limited set of MVD candidates for MMVD mode. In some embodiments, fast MMVD candidate selection 850 of FIG. 8 may select an MVD candidate with a lowest prediction cost.

In 914, RD costs for various inter-prediction options/modes may be determined and compared. In some embodiments, RDO 860 may determine the RD costs and compare the RD costs to find the option/mode with the lowest RD cost. The RD costs may include the RD cost associated with enabling MMVD using the selected MVD from 910 or 912. The RD costs may include the RD cost associated with not using MMVD but using regular merge mode using candidates from a merge list. Based on the RD costs, an inter-prediction decision for encoding the motion vector may be decided based on the option or mode that has a lowest RD cost.

In 916, the inter-prediction decision determined in 910 may be applied to encode the block, or the motion vector of the block.

*Approaches for deciding the precision of a MVD*

FIG. 10 illustrates a precision decision process 1000, according to some embodiments of the disclosure. The process 1000 may illustrate some implementations of operation 906 of process 900 in FIG. 9. In some embodiments, precision decision process 1000 may decide or select the MVD precision based on the quantization parameter of the current frame.

In 1002, the quantization parameter of a current frame to be encoded may be compared against a threshold. If the quantization parameter is less than a threshold, process 1000 follows the "YES" path from 1002 to 1006. If the quantization parameter is greater than or equal to a threshold, process 1000 follows the "NO" path from 1002 to 1004.

In 1006, fractional precision may be used for MVD precision.

In 1004, integer precision may be used for MVD precision.

FIG. 11 illustrates a precision decision process 1100, according to some embodiments of the disclosure. The process 1100 may illustrate some implementations of operation 906 of process 900 in FIG. 9. In some embodiments, precision decision process 1100 may decide or select the MVD precision based on the motion information and the quantization parameter of the current frame.

In 1102, a threshold for comparing a quantization parameter of the current frame is determined or set based on motion information determined in 902.

In 1002, the quantization parameter of a current frame to be encoded may be compared against the threshold set in 1102. If the quantization parameter is less than a threshold, process 1100 follows the "YES" path from 1002 to 1006. If the quantization parameter is greater than or equal to a threshold, process 1100 follows the "NO" path from 1002 to 1004.

In 1006, fractional precision may be used for MVD precision.

In 1004, integer precision may be used for MVD precision.

Process 1100 may be extended to determine precision further using resolution (e.g., using motion information and resolution together). The process 1100 may be extended to determine precision using resolution in place of motion information.

FIG. 12 illustrates a precision decision process, according to some embodiments of the disclosure. The process 1200 may illustrate some implementations of operation 906 of process 900 in FIG. 9. In some embodiments, precision decision process 1200 may decide or select the MVD precision based on the motion information and the quantization parameter of the current frame.

In 1202, the quantization parameter of a current frame to be encoded may be compared against threshold A. If the quantization parameter is less than threshold A, process 1200 follows the "YES" path from 1002 to 1006. If the quantization parameter is greater than or equal to a threshold, process 1000 follows the "NO" path from 1002 to 1204.

In 1204, the quantization parameter of a current frame to be encoded may be compared against threshold B. If the quantization parameter is greater than threshold B, process 1200 follows the "YES" path from 1002 to 1104. If the quantization parameter is less than or equal to a threshold, process 1000 follows the "NO" path from 1204 to 1206.

In some cases, operation 1202 is carried out before operation 1204. In some cases, operation 1204 is carried out before operation 1202. In some cases, operation 1202 may be carried out in parallel with operation 1204.

In 1206, the motion information from 902 may be checked to determine if the current frame has large motion. If the current frame has large motion, the process 1200 follows the "YES" path from 1206 to 1004. If the current frame does not have large motion, the process 1200 follows the "NO" path from 1206 to 1006.

In 1006, fractional precision may be used for MVD precision.

In 1004, integer precision may be used for MVD precision.

Process 1200 may be extended to determine precision further using resolution (e.g., using motion information and resolution together). The process 1200 may be extended to determine precision using resolution in place of motion information.

*Methods for making an inter-prediction decision*

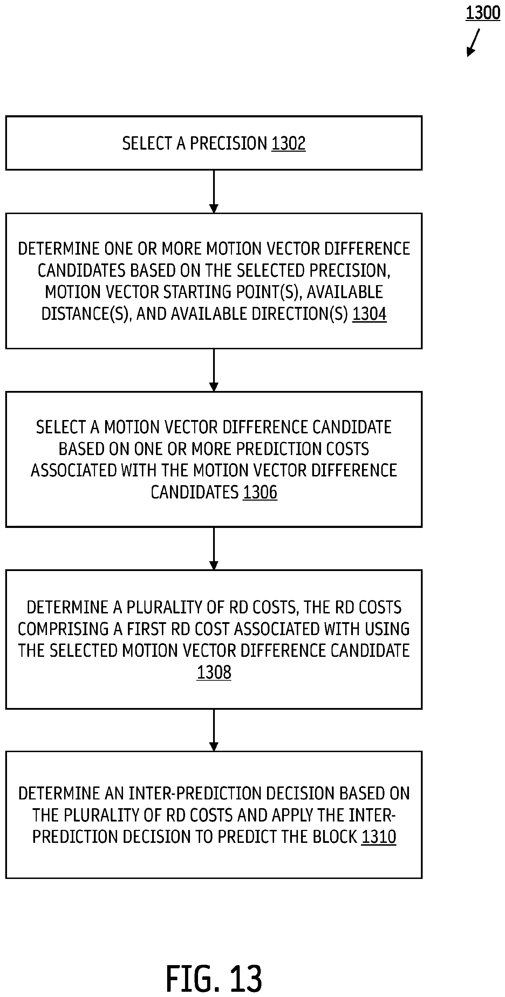

FIG. 13 illustrates method 1300 for making an inter-prediction decision, according to some embodiments of the disclosure. Method 1300 may be performed by one or more components in inter-prediction 236 of FIG. 8. One or more operations of method 1300 may be encoded as instructions on memory 1404, which can be executed by processing device 1402 to carry out the one or more operations of method 1300.

In 1302, a precision may be selected from a fractional precision and an integer precision for encoding a current motion vector of a block in a current frame based on a quantization parameter of the current frame.

In 1304, one or more MVD candidates based on the selected precision may be determined.

In 1306, a MVD candidate may be selected based on one or more prediction costs associated with the one or more MVD candidates.

In 1308, a plurality of rate-distortion costs may be determined. The rate-distortion costs can include a first rate-distortion cost associated with using the selected MVD candidate.

In 1310, an inter-prediction decision may be determined based on the plurality of rate-distortion costs and applying the inter-prediction decision to predict the block.

*Exemplary computing device*

FIG. 14 is a block diagram of an apparatus or a system, e.g., an exemplary computing device 1400, according to some embodiments of the disclosure. One or more computing devices 1400 may be used to implement the functionalities described with the FIGS. and herein. A number of components are illustrated in the FIGS. can be included in the computing device 1400, but any one or more of these components may be omitted or duplicated, as suitable for the application. In some embodiments, some or all of the components included in the computing device 1400 may be attached to one or more motherboards. In some embodiments, some or all of these components are fabricated onto a single system on a chip (SoC) die. Additionally, in various embodiments, the computing device 1400 may not include one or more of the components illustrated in FIG. 14, and the computing device 1400 may include interface circuitry for coupling to the one or more components. For example, the computing device 1400 may not include a display device 1406, and may include display device interface circuitry (e.g., a connector and driver circuitry) to which a display device 1406 may be coupled. In another set of examples, the computing device 1400 may not include an audio input device 1418 or an audio output device 1408 and may include audio input or output device interface circuitry (e.g., connectors and supporting circuitry) to which an audio input device 1418 or audio output device 1408 may be coupled.

The computing device 1400 may include a processing device 1402 (e.g., one or more processing devices, one or more of the same type of processing device, one or more of different types of processing device). The processing device 1402 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 1402 may include a CPU, a GPU, a quantum processor, a machine learning processor, an artificial intelligence processor, a neural-network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1400 may include a memory 1404, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1404 includes one or more non-transitory computer-readable storage media. In some embodiments, memory 1404 may include memory that shares a die with the processing device 1402.

In some embodiments, memory 1404 includes one or more non-transitory computer-readable media storing instructions executable to perform operations described herein, such as operations illustrated in FIGS. 1-12, process 900, process 1000, process 1100, process 1200 and method 1300. In some embodiments, memory 1404 includes one or more non-transitory computer-readable media storing instructions executable to perform one or more operations of encoder 102. In some embodiments, memory 1404 includes one or more non-transitory computer-readable media storing instructions executable to perform one or more operations of inter-prediction 236. The instructions stored in memory 1404 may be executed by processing device 1402.

In some embodiments, memory 1404 may store data, e.g., data structures, binary data, bits, metadata, files, blobs, etc., as described with the FIGS. and herein. Memory 1404 may include one or more non-transitory computer-readable media storing one or more of: input frames to the encoder (e.g., video frames 104), intermediate data structures computed by the encoder, bitstream generated by the encoder (encoded bitstream 180), bitstream received by a decoder (encoded bitstream 180), intermediate data structures computed by the decoder, and reconstructed frames generated by the decoder. Memory 1404 may include one or more non-transitory computer-readable media storing one or more of: data received and/or data generated by inter-prediction 236 of FIGS. 2 and 8. Memory 1404 may include one or more non-transitory computer-readable media storing one or more of: data received and/or data generated by process 900 of FIG. 9. Memory 1404 may include one or more non-transitory computer-readable media storing one or more of: data received and/or data generated by process 1000 of FIG. 10. Memory 1404 may include one or more non-transitory computer-readable media storing one or more of: data received and/or data generated by process 1100 of FIG. 11. Memory 1404 may include one or more non-transitory computer-readable media storing one or more of: data received and/or data generated by process 1200 of FIG. 12. Memory 1404 may include one or more non-transitory computer-readable media storing one or more of: data received and/or data generated by method 1300 of FIG. 13.

In some embodiments, the computing device 1400 may include a communication device 1412 (e.g., one or more communication devices). For example, the communication device 1412 may be configured for managing wired and/or wireless communications for the transfer of data to and from the computing device 1400. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1412 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1412 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1412 may operate in accordance with other wireless protocols in other embodiments. The computing device 1400 may include an antenna 1422 to facilitate wireless communications and/or to receive other wireless communications (such as radio frequency transmissions). Computing device 1400 may include receiver circuits and/or transmitter circuits. In some embodiments, the communication device 1412 may manage wired communications, such as electrical, optical, or any other suitable communication protocols (e.g., the Ethernet). As noted above, the communication device 1412 may include multiple communication chips. For instance, a first communication device 1412 may be dedicated to shorter-range wireless communications such as Wi-Fi or Bluetooth, and a second communication device 1412 may be dedicated to longer-range wireless communications such as global positioning system (GPS), EDGE, GPRS, CDMA, WiMAX, LTE, EV-DO, or others. In some embodiments, a first communication device 1412 may be dedicated to wireless communications, and a second communication device 1412 may be dedicated to wired communications.

The computing device 1400 may include power source / power circuitry 1414. The power source / power circuitry 1414 may include one or more energy storage devices (e.g., batteries or capacitors) and/or circuitry for coupling components of the computing device 1400 to an energy source separate from the computing device 1400 (e.g., DC power, AC power, etc.).

The computing device 1400 may include a display device 1406 (or corresponding interface circuitry, as discussed above). The display device 1406 may include any visual indicators, such as a heads-up display, a computer monitor, a projector, a touchscreen display, a liquid crystal display (LCD), a light-emitting diode display, or a flat panel display, for example.

The computing device 1400 may include an audio output device 1408 (or corresponding interface circuitry, as discussed above). The audio output device 1408 may include any device that generates an audible indicator, such as speakers, headsets, or earbuds, for example.

The computing device 1400 may include an audio input device 1418 (or corresponding interface circuitry, as discussed above). The audio input device 1418 may include any device that generates a signal representative of a sound, such as microphones, microphone arrays, or digital instruments (e.g., instruments having a musical instrument digital interface (MIDI) output).

The computing device 1400 may include a GPS device 1416 (or corresponding interface circuitry, as discussed above). The GPS device 1416 may be in communication with a satellite-based system and may receive a location of the computing device 1400, as known in the art.

The computing device 1400 may include a sensor 1430 (or one or more sensors). The computing device 1400 may include corresponding interface circuitry, as discussed above). Sensor 1430 may sense physical phenomenon and translate the physical phenomenon into electrical signals that can be processed by, e.g., processing device 1402. Examples of sensor 1430 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1400 may include another output device 1410 (or corresponding interface circuitry, as discussed above). Examples of the other output device 1410 may include an audio codec, a video codec, a printer, a wired or wireless transmitter for providing information to other devices, haptic output device, gas output device, vibrational output device, lighting output device, home automation controller, or an additional storage device.

The computing device 1400 may include another input device 1420 (or corresponding interface circuitry, as discussed above). Examples of the other input device 1420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1400 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1400 may be any other electronic device that processes data.

*Select examples*

Example 1 provides a method, including selecting a precision, between a fractional precision and an integer precision, for encoding a current motion vector of a block in a current frame based on a quantization parameter of the current frame; determining one or more motion vector difference candidates based on the selected precision; selecting a motion vector difference candidate based on one or more prediction costs associated with the one or more motion vector difference candidates; determining one or more rate-distortion costs, the one or more rate-distortion costs including a first rate-distortion cost associated with using the selected motion vector difference candidate; and determining an inter-prediction decision based on the one or more rate-distortion costs and applying the inter-prediction decision to predict the block.

Example 2 provides the method of example 1, where selecting the precision includes selecting the precision further based on one or more of motion information and resolution of the current frame.

Example 3 provides the method of example 1 or 2, where selecting the precision includes determining whether the quantization parameter is less than a first threshold; and in response to determining that the quantization parameter is less than the first threshold, selecting the fractional precision as the selected precision.

Example 4 provides the method of any one of examples 1-3, where selecting the precision includes determining whether the quantization parameter is greater than or equal to a second threshold; and in response to determining that the quantization parameter is greater than or equal to the second threshold, selecting the integer precision as the selected precision.

Example 5 provides the method of anyone of examples 1-2, where selecting the precision includes determining whether the quantization parameter is less than a third threshold; in response to determining that the quantization parameter is less than the third threshold, selecting the fractional precision as the selected precision; and in response to determining that the quantization parameter is greater than or equal to the third threshold, selecting the integer precision as the selected precision; where the third threshold is set based on one or more of motion information and resolution of the current frame.

Example 6 provides the method of example 5, where selecting the precision further includes determining whether the motion information indicates large motion; in response to determining that the motion information indicates large motion, setting the third threshold is set to a first value; and in response to determining that the motion information does not indicate large motion, setting the third threshold to a second value, where the second value is greater than the first value.

Example 7 provides the method of anyone of examples 1-2, where selecting the precision includes determining whether the quantization parameter is less than a fourth threshold; in response to determining that the quantization parameter is less than the fourth threshold, selecting the fractional precision as the selected precision; determining whether the quantization parameter is greater than a fifth threshold, the fifth threshold being greater than the fourth threshold; and in response to determining that the quantization parameter is greater than the fifth threshold, selecting the integer precision as the selected precision.

Example 8 provides the method of example 7, where selecting the precision further includes in response to determining that the quantization parameter is greater than or equal to the fourth threshold and less than or equal to the fifth threshold: determining whether motion information of the current frame indicates large motion; in response to determining that the motion information indicates large motion, selecting the integer precision as the selected precision; and in response to determining that the motion information does not indicate large motion, selecting the fractional precision as the selected precision.

Example 9 provides the method of anyone of examples 1-8, where determining the one or more motion vector difference candidates includes determining the one or more motion vector difference candidates based on the selected precision, one or more motion vector starting points, one or more available magnitudes, and one or more available directions.

Example 10 provides the method of any one of example 1-9, where determining the one or more motion vector difference candidates includes determining sixty four motion vector difference candidates based on combinations of two motion vector starting points, eight available magnitudes, and four available directions.

Example 11 provides the method of any one of example 1-10, where determining the one or more motion vector difference candidates includes determining whether motion information of the current frame indicates large motion; in response to determining that the motion information indicates large motion, determining sixty four motion vector difference candidates based on combinations of two motion vector starting points, eight available magnitudes, and four available directions; and in response to determining that the motion information does not indicate large motion, determining thirty two motion vector difference candidates based on combinations of two motion vector starting points, four available magnitudes, and four available directions.

Example 12 provides the method of any one of example 1-11, where determining the one or more motion vector difference candidates includes determining whether a resolution of current frame is smaller than a predetermined resolution; in response to determining that the resolution is smaller than the predetermined resolution, determining thirty two motion vector difference candidates based on combinations of two motion vector starting points, four available magnitudes, and four available directions; and in response to determining that the resolution is larger than the predetermined resolution, determining sixty four motion vector difference candidates based on combinations of two motion vector starting points, eight available magnitudes, and four available directions.

Example 13 provides the method of any one of examples 1-12, where: the one or more prediction costs includes one or more sums of absolute transformed differences between original samples of the block and predicted samples of the block generated using a corresponding motion vector difference candidate.

Example 14 provides the method of any one of examples 1-13, where selecting the motion vector difference candidate includes selecting the motion vector difference candidate having a lowest prediction cost.

Example 15 provides the method of any one of examples 1-14, where the one or more rate-distortion costs include a second rate-distortion cost associated with using a merge list of motion vectors.

Example 16 provides the method of any one of examples 1-14, where determining the inter-prediction decision includes selecting the inter-prediction decision having a lowest rate-distortion cost.

Example 17 provides the method of any one of examples 1-15, further including encoding the current motion vector of the block in an encoded bitstream according to the inter-prediction decision.

Example 18 provides one or more non-transitory computer-readable media storing instructions that, when executed by one or more processors, cause the one or more processors to: select a precision, between a fractional precision and an integer precision, for encoding a current motion vector of a block in a current frame based on a quantization parameter of the current frame; determine one or more motion vector difference candidates based on the selected precision; select a motion vector difference candidate based on one or more prediction costs associated with the one or more motion vector difference candidates; determine one or more rate-distortion costs, the one or more rate-distortion costs including a first rate-distortion cost associated with using the selected motion vector difference candidate; and determine an inter-prediction decision based on the one or more rate-distortion costs and applying the inter-prediction decision to predict the block.

Example 19 provides the one or more non-transitory computer-readable media of example 18, where selecting the precision includes selecting the precision further based on one or more of motion information and resolution of the current frame.

Example 20 provides the one or more non-transitory computer-readable media of example 18 or 19, where selecting the precision includes determining whether the quantization parameter is less than a first threshold; and in response to determining that the quantization parameter is less than the first threshold, selecting the fractional precision as the selected precision.

Example 21 provides the one or more non-transitory computer-readable media of any one of examples 18-20, where selecting the precision includes determining whether the quantization parameter is greater than or equal to a second threshold; and in response to determining that the quantization parameter is greater than or equal to the second threshold, selecting the integer precision as the selected precision.

Example 22 provides the one or more non-transitory computer-readable media of any one of examples 18-19, where selecting the precision includes determining whether the quantization parameter is less than a third threshold; in response to determining that the quantization parameter is less than the third threshold, selecting the fractional precision as the selected precision; and in response to determining that the quantization parameter is greater than or equal to the third threshold, selecting the integer precision as the selected precision; where the third threshold is set based on one or more of motion information and resolution of the current frame.

Example 23 provides the one or more non-transitory computer-readable media of example 22, where selecting the precision further includes determining whether the motion information indicates large motion; in response to determining that the motion information indicates large motion, setting the third threshold is set to a first value; and in response to determining that the motion information does not indicate large motion, setting the third threshold to a second value, where the second value is greater than the first value.

Example 24 provides the one or more non-transitory computer-readable media of anyone of examples 18-19, where selecting the precision includes determining whether the quantization parameter is less than a fourth threshold; in response to determining that the quantization parameter is less than the fourth threshold, selecting the fractional precision as the selected precision; determining whether the quantization parameter is greater than a fifth threshold, the fifth threshold being greater than the fourth threshold; and in response to determining that the quantization parameter is greater than the fifth threshold, selecting the integer precision as the selected precision.

Example 25 provides the one or more non-transitory computer-readable media of example 24, where selecting the precision further includes in response to determining that the quantization parameter is greater than or equal to the fourth threshold and less than or equal to the fifth threshold: determining whether motion information of the current frame indicates large motion; in response to determining that the motion information indicates large motion, selecting the integer precision as the selected precision; and in response to determining that the motion information does not indicate large motion, selecting the fractional precision as the selected precision.

Example 26 provides the one or more non-transitory computer-readable media of any one of examples 18-25, where determining the one or more motion vector difference candidates includes determining the one or more motion vector difference candidates based on the selected precision, one or more motion vector starting points, one or more available magnitudes, and one or more available directions.

Example 27 provides the one or more non-transitory computer-readable media of any one of example 18-26, where determining the one or more motion vector difference candidates includes determining sixty four motion vector difference candidates based on combinations of two motion vector starting points, eight available magnitudes, and four available directions.

Example 28 provides the one or more non-transitory computer-readable media of any one of example 18-27, where determining the one or more motion vector difference candidates includes determining whether motion information of the current frame indicates large motion; in response to determining that the motion information indicates large motion, determining sixty four motion vector difference candidates based on combinations of two motion vector starting points, eight available magnitudes, and four available directions; and in response to determining that the motion information does not indicate large motion, determining thirty two motion vector difference candidates based on combinations of two motion vector starting points, four available magnitudes, and four available directions.

Example 29 provides the one or more non-transitory computer-readable media of any one of example 18-28, where determining the one or more motion vector difference candidates includes determining whether a resolution of current frame is smaller than a predetermined resolution; in response to determining that the resolution is smaller than the predetermined resolution, determining thirty two motion vector difference candidates based on combinations of two motion vector starting points, four available magnitudes, and four available directions; and in response to determining that the resolution is larger than the predetermined resolution, determining sixty four motion vector difference candidates based on combinations of two motion vector starting points, eight available magnitudes, and four available directions.

Example 30 provides the one or more non-transitory computer-readable media of any one of examples 18-29, where: the one or more prediction costs includes one or more sums of absolute transformed differences between original samples of the block and predicted samples of the block generated using a corresponding motion vector difference candidate.

Example 31 provides the one or more non-transitory computer-readable media of any one of examples 18-30, where selecting the motion vector difference candidate includes selecting the motion vector difference candidate having a lowest prediction cost.

Example 32 provides the one or more non-transitory computer-readable media of any one of examples 18-31, where the one or more rate-distortion costs include a second rate-distortion cost associated with using a merge list of motion vectors.

Example 33 provides the one or more non-transitory computer-readable media of anyone of examples 18-32, where determining the inter-prediction decision includes selecting the inter-prediction decision having a lowest rate-distortion cost.

Example 34 provides the one or more non-transitory computer-readable media of any one of examples 18-33, where the instructions further cause the one or more processors to: encode the current motion vector of the block in an encoded bitstream according to the inter-prediction decision.

Example 35 provides a system, including one or more processors; and one or more non-transitory computer-readable media storing instructions that, when executed by the one or more processors, cause the one or more processors to: select a precision, between a fractional precision and an integer precision, for encoding a current motion vector of a block in a current frame based on a quantization parameter of the current frame; determine one or more motion vector difference candidates based on the selected precision; select a motion vector difference candidate based on one or more prediction costs associated with the one or more motion vector difference candidates; determine one or more rate-distortion costs, the one or more rate-distortion costs including a first rate-distortion cost associated with using the selected motion vector difference candidate; and determine an inter-prediction decision based on the one or more rate-distortion costs and applying the inter-prediction decision to predict the block.

Example 36 provides the system of example 35, where selecting the precision includes selecting the precision further based on one or more of motion information and resolution of the current frame.

Example 37 provides the system of example 35 or 36, where selecting the precision includes determining whether the quantization parameter is less than a first threshold; and in response to determining that the quantization parameter is less than the first threshold, selecting the fractional precision as the selected precision.

Example 38 provides the system of any one of examples 35-37, where selecting the precision includes determining whether the quantization parameter is greater than or equal to a second threshold; and in response to determining that the quantization parameter is greater than or equal to the second threshold, selecting the integer precision as the selected precision.

Example 39 provides the system of any one of examples 35-36, where selecting the precision includes determining whether the quantization parameter is less than a third threshold; in response to determining that the quantization parameter is less than the third threshold, selecting the fractional precision as the selected precision; and in response to determining that the quantization parameter is greater than or equal to the third threshold, selecting the integer precision as the selected precision; where the third threshold is set based on one or more of motion information and resolution of the current frame.

Example 40 provides the system of example 39, where selecting the precision further includes determining whether the motion information indicates large motion; in response to determining that the motion information indicates large motion, setting the third threshold is set to a first value; and in response to determining that the motion information does not indicate large motion, setting the third threshold to a second value, where the second value is greater than the first value.

Example 41 provides the system of any one of examples 35-36, where selecting the precision includes determining whether the quantization parameter is less than a fourth threshold; in response to determining that the quantization parameter is less than the fourth threshold, selecting the fractional precision as the selected precision; determining whether the quantization parameter is greater than a fifth threshold, the fifth threshold being greater than the fourth threshold; and in response to determining that the quantization parameter is greater than the fifth threshold, selecting the integer precision as the selected precision.

Example 42 provides the system of example 41, where selecting the precision further includes in response to determining that the quantization parameter is greater than or equal to the fourth threshold and less than or equal to the fifth threshold: determining whether motion information of the current frame indicates large motion; in response to determining that the motion information indicates large motion, selecting the integer precision as the selected precision; and in response to determining that the motion information does not indicate large motion, selecting the fractional precision as the selected precision.

Example 43 provides the system of any one of examples 35-42, where determining the one or more motion vector difference candidates includes determining the one or more motion vector difference candidates based on the selected precision, one or more motion vector starting points, one or more available magnitudes, and one or more available directions.

Example 44 provides the system of any one of example 35-43, where determining the one or more motion vector difference candidates includes determining sixty four motion vector difference candidates based on combinations of two motion vector starting points, eight available magnitudes, and four available directions.

Example 45 provides the system of any one of example 35-44, where determining the one or more motion vector difference candidates includes determining whether motion information of the current frame indicates large motion; in response to determining that the motion information indicates large motion, determining sixty four motion vector difference candidates based on combinations of two motion vector starting points, eight available magnitudes, and four available directions; and in response to determining that the motion information does not indicate large motion, determining thirty two motion vector difference candidates based on combinations of two motion vector starting points, four available magnitudes, and four available directions.

Example 46 provides the system of any one of example 35-45, where determining the one or more motion vector difference candidates includes determining whether a resolution of current frame is smaller than a predetermined resolution; in response to determining that the resolution is smaller than the predetermined resolution, determining thirty two motion vector difference candidates based on combinations of two motion vector starting points, four available magnitudes, and four available directions; and in response to determining that the resolution is larger than the predetermined resolution, determining sixty four motion vector difference candidates based on combinations of two motion vector starting points, eight available magnitudes, and four available directions.

Example 47 provides the system of any one of examples 35-46, where: the one or more prediction costs includes one or more sums of absolute transformed differences between original samples of the block and predicted samples of the block generated using a corresponding motion vector difference candidate.

Example 48 provides the system of any one of examples 35-47, where selecting the motion vector difference candidate includes selecting the motion vector difference candidate having a lowest prediction cost.

Example 49 provides the system of any one of examples 35-48, where the one or more rate-distortion costs include a second rate-distortion cost associated with using a merge list of motion vectors.

Example 50 provides the system of any one of examples 35-49, where determining the inter-prediction decision includes selecting the inter-prediction decision having a lowest rate-distortion cost.

Example 51 provides the system of any one of examples 35-50, where the instructions further cause the one or more processors to: encode the current motion vector of the block in an encoded bitstream according to the inter-prediction decision.

Example A provides an apparatus comprising means to carry out or means for carrying out any one of the methods provided in examples 1-17 and methods/processes described herein.

Example B provides one or more non-transitory computer-readable media storing instructions that, when executed by one or more processors, cause the one or more processors to perform any one of the methods provided in examples 1-17 and methods/processes described herein.

Example C provides an apparatus, comprising: one or more processors to execute instructions, and one or more non-transitory computer-readable media storing the instructions that, when executed by one or more processors, cause the one or more processors to perform any one of the methods provided in examples 1-17 and methods/processes described herein.

Example D provides an encoder to generate an encoded bitstream using operations described herein.

Example E provides an encoder to perform any one of the methods provided in examples 1-17 and methods/processes described herein.

Example F provides motion estimation 234 and inter-prediction 236 as described herein.

*Variations and other notes*

Although the operations of the example method shown in and described with reference to FIGS. 9-13 are illustrated as occurring once each and in a particular order, it will be recognized that some operations may be performed in any suitable order and repeated as desired. Furthermore, the operations illustrated in FIGS. 9-13 or other FIGS. may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:

   selecting a precision, between a fractional precision and an integer precision, for encoding a current motion vector of a block in a current frame based on a quantization parameter of the current frame;
   determining one or more motion vector difference candidates based on the selected precision;
   selecting a motion vector difference candidate based on one or more prediction costs associated with the one or more motion vector difference candidates, the one or more prediction costs optionally including one or more sums of absolute transformed differences between original samples of the block and predicted samples of the block generated using a corresponding motion vector difference candidate, and the selecting optionally comprising selecting the motion vector difference candidate having a lowest prediction cost;
   determining one or more rate-distortion costs, the one or more rate-distortion costs comprising a first rate-distortion cost associated with using the selected motion vector difference candidate and optionally a second rate-distortion cost associated with using a merge list of motion vectors; and
   determining an inter-prediction decision based on the one or more rate-distortion costs and applying the inter-prediction decision to predict the block, the determining optionally comprising selecting the inter-prediction decision having a lowest rate-distortion cost.

2. The method of claim 1, wherein selecting the precision comprises:
   selecting the precision further based on one or more of motion information and resolution of the current frame.

3. The method of claim 1 or 2, wherein selecting the precision comprises:

   determining whether the quantization parameter is less than a first threshold; and
   in response to determining that the quantization parameter is less than the first threshold, selecting the fractional precision as the selected precision.

4. The method of any one of claims 1-3, wherein selecting the precision comprises:

   determining whether the quantization parameter is greater than or equal to a second threshold; and
   in response to determining that the quantization parameter is greater than or equal to the second threshold, selecting the integer precision as the selected precision.

5. The method of claim 1 or 2, wherein selecting the precision comprises:

   determining whether the quantization parameter is less than a third threshold;
   in response to determining that the quantization parameter is less than the third threshold, selecting the fractional precision as the selected precision; and

in response to determining that the quantization parameter is greater than or equal to the third threshold, selecting the integer precision as the selected precision;

wherein the third threshold is set based on one or more of motion information and resolution of the current frame.

6. The method of claim 5, wherein selecting the precision further comprises:

determining whether the motion information indicates large motion;

in response to determining that the motion information indicates large motion, setting the third threshold is set to a first value; and

in response to determining that the motion information does not indicate large motion, setting the third threshold to a second value, wherein the second value is greater than the first value.

7. The method of claim 1 or 2, wherein selecting the precision comprises:

determining whether the quantization parameter is less than a fourth threshold;

in response to determining that the quantization parameter is less than the fourth threshold, selecting the fractional precision as the selected precision;

determining whether the quantization parameter is greater than a fifth threshold, the fifth threshold being greater than the fourth threshold; and

in response to determining that the quantization parameter is greater than the fifth threshold, selecting the integer precision as the selected precision.

8. The method of claim 7, wherein selecting the precision further comprises:
in response to determining that the quantization parameter is greater than or equal to the fourth threshold and less than or equal to the fifth threshold:

determining whether motion information of the current frame indicates large motion;

in response to determining that the motion information indicates large motion, selecting the integer precision as the selected precision; and

in response to determining that the motion information does not indicate large motion, selecting the fractional precision as the selected precision.

9. The method of any one of claims 1-8, wherein determining the one or more motion vector difference candidates comprises:
determining the one or more motion vector difference candidates based on the selected precision, one or more motion vector starting points, one or more available magnitudes, and one or more available directions.

10. The method of any one of claims 1-9, wherein determining the one or more motion vector difference candidates comprises:
determining sixty four motion vector difference candidates based on combinations of two motion vector starting points, eight available magnitudes, and four available directions.

11. The method of any one of claims 1-10, wherein determining the one or more motion vector difference candidates comprises:

determining whether motion information of the current frame indicates large motion;

in response to determining that the motion information indicates large motion, determining sixty four motion vector difference candidates based on combinations of two motion vector starting points, eight available magnitudes, and four available directions; and

in response to determining that the motion information does not indicate large motion, determining thirty two motion vector difference candidates based on combinations of two motion vector starting points, four available magnitudes, and four available directions.

12. The method of any one of claims 1-11, wherein determining the one or more motion vector difference candidates comprises:

determining whether a resolution of current frame is smaller than a predetermined resolution;

in response to determining that the resolution is smaller than the predetermined resolution, determining thirty two motion vector difference candidates based on combinations of two motion vector starting points, four available magnitudes, and four available directions; and
in response to determining that the resolution is larger than the predetermined resolution, determining sixty four motion vector difference candidates based on combinations of two motion vector starting points, eight available magnitudes, and four available directions.

13. One or more non-transitory computer-readable media storing instructions that, when executed by one or more processors, cause the one or more processors to perform a method as claimed in any one of claims 1-12.

14. An apparatus comprising means to perform a method as claimed in any one of claims 1-12.

15. A computer program comprising instructions, which, when the program is executed by a computer, cause the computer to carry out the method as claimed in any one of claims 1-12.

ENCODING SYSTEM 130

VIDEO FRAMES 104

ENCODER 102

ENCODED BITSTREAM 180 (e.g., 0 1 0 1 1 0...)

NETWORK 140

ENCODED BITSTREAM 180 (e.g., 0 1 0 1 1 0...)

DECODER 1 $162_1$

$168_1$

DISPLAY DEVICE 1 $164_1$

DECODING SYSTEM 1 $150_1$

DECODER 2 $162_2$

$168_2$

DISPLAY DEVICE 2 $164_2$

DECODING SYSTEM 2 $150_2$

...

DECODER D $162_D$

$168_D$

DISPLAY DEVICE D $164_D$

DECODING SYSTEM D $150_D$

FIG. 1

FIG. 2

FIG. 3

| IDENTIFY SPATIAL MOTION VECTOR PREDICTOR CANDIDATES 412 | IDENTIFY TEMPORAL MOTION VECTOR PREDICTOR CANDIDATES 414 | ... |

COLLATE CANDIDATES 416

MERGE LIST 402

| 0 | 1 | 2 | 3 | 4 | 5 |
|---|---|---|---|---|---|
| MV0 | MV1 | MV2 | MV3 | MV4 | MV5 |

STARTING POINTS 480

# FIG. 4

| mmvd_distance_idx | 0 | 1 | 2 | 3 | 4 | 5 | 6 | 7 |
|---|---|---|---|---|---|---|---|---|
| MmvdDistance (in qpel) (ph_mmvd_fullpel_only_flag == 0) | 1 | 2 | 4 | 8 | 16 | 32 | 64 | 128 |
| MmvdDistance (in qpel) (ph_mmvd_fullpel_only_flag == 1) | 4 | 8 | 16 | 32 | 64 | 128 | 256 | 512 |

# FIG. 5

| mmvd_direction_idx | 00 | 01 | 10 | 11 |
|---|---|---|---|---|
| x-axis | + | − | N/A | N/A |
| y-axis | N/A | N/A | + | − |

# FIG. 6

32 CANDIDATES PER STARTING POINT PER PRECISION

FIG. 7

FIG. 8

900

| MOTION ANALYSIS 902 | | QP DECISION 904 |

PRECISION DECISION
906

RESOLUTION
AND/OR
MOTION MEET
CONDITION(S)?
908

NO

YES

SELECT MMVD
CANDIDATE 912

FAST SELECT MMVD CANDIDATE 910

DETERMINE AND COMPARE RD COSTS
(USING SELECTED MMVD CANDIDATE VS
USING REGULAR MERGE MODE) 914

APPLY PREDICTION DECISION 916

FIG. 9

1000

QP DECISION 904

PRECISION DECISION 906

QP <
THRESHOLD
1002

YES

NO

USE FRACTIONAL
PRECISION 1006

USE INTEGER
PRECISION 1004

FIG. 10

1100

MOTION ANALYSIS 902

QP DECISION 904

PRECISION DECISION 906

SET QP THRESHOLD
BASED ON MOTION
1102

QP <
THRESHOLD
1002

YES

NO

USE FRACTIONAL
PRECISION 1006

USE INTEGER
PRECISION 1004

FIG. 11

1200

MOTION ANALYSIS 902

QP DECISION 904

PRECISION DECISION 906

QP <
THRESHOLD
A 1202 — YES

NO

QP >
THRESHOLD
B 1204 — YES

NO

LARGE
MOTION?
1206 — NO

YES

USE FRACTIONAL
PRECISION 1006

USE INTEGER
PRECISION 1004

FIG. 12

1300

SELECT A PRECISION 1302

DETERMINE ONE OR MORE MOTION VECTOR DIFFERENCE
CANDIDATES BASED ON THE SELECTED PRECISION,
MOTION VECTOR STARTING POINT(S), AVAILABLE
DISTANCE(S), AND AVAILABLE DIRECTION(S) 1304

SELECT A MOTION VECTOR DIFFERENCE CANDIDATE
BASED ON ONE OR MORE PREDICTION COSTS
ASSOCIATED WITH THE MOTION VECTOR DIFFERENCE
CANDIDATES 1306

DETERMINE A PLURALITY OF RD COSTS, THE RD COSTS
COMPRISING A FIRST RD COST ASSOCIATED WITH USING
THE SELECTED MOTION VECTOR DIFFERENCE CANDIDATE
1308

DETERMINE AN INTER-PREDICTION DECISION BASED ON
THE PLURALITY OF RD COSTS AND APPLY THE INTER-
PREDICTION DECISION TO PREDICT THE BLOCK 1310

FIG. 13

COMPUTING DEVICE 1400

MEMORY 1404

104　　180

MOTION ESTIMATION 234

900

1200

102

INTER-PREDICTION 236

1000

1300

1100

PROCESSING DEVICE 1402

ANTENNA 1422

COMMUNICATION DEVICE 1412

DISPLAY DEVICE 1406

GPS DEVICE 1416

POWER SOURCE / POWER CIRCUITRY 1414

AUDIO OUTPUT DEVICE 1408

AUDIO INPUT DEVICE 1418

OTHER OUTPUT DEVICE 1410

OTHER INPUT DEVICE 1420

SENSOR 1430

# FIG. 14

Europäisches
Patentamt

European
Patent Office

Office européen
des brevets

# EUROPEAN SEARCH REPORT

**Application Number**

EP 25 15 7367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/098089 A1 (CHEN JIANLE [US] ET AL) 5 April 2018 (2018-04-05) | 1,2, 13-15 | INV. H04N19/523 |
| Y | * figure 2 * | 3-5,7, | H04N19/109 |
| | * paragraph [0069] - paragraph [0075] * | 9-12 | H04N19/176 |
| A | * paragraph [0132] - paragraph [0148] * | 6,8 | H04N19/139 |
| | * paragraph [0172] * | | H04N19/147 |
| | ----- | | H04N19/105 |
| Y | RIBAS-CORBERA J ET AL: "OPTIMIZING MOTION-VECTOR ACCURACY IN BLOCK-BASED VIDEO CODING", IEEE TRANSACTIONS ON CIRCUITS AND SYSTEMS FOR VIDEO TECHNOLOGY, IEEE, USA, vol. 11, no. 4, 1 April 2001 (2001-04-01), pages 497-511, XP001093569, ISSN: 1051-8215, DOI: 10.1109/76.915356 | 3-5,7 | H04N19/52 |
| A | * figure 10 * | 1,2,6, | |
| | * abstract * | 8-15 | |
| | ----- | | |
| Y | US 11 638 016 B2 (MICROSOFT TECHNOLOGY LICENSING LLC [US]) 25 April 2023 (2023-04-25) | 3-5,7 | |
| | | | **TECHNICAL FIELDS SEARCHED (IPC)** |
| A | * column 22: Section 1. "Approaches that Use Hints from Application, Operating System or Video Source"; column 25: section 4 "Approaches that Use Low-Complexity Content Analysis" * | 1,2,6,8, 13-15 | H04N |
| | ----- | | |
| | -/-- | | |

The present search report has been drawn up for all claims

| Place of search | Date of completion of the search | Examiner |
|---|---|---|
| The Hague | 7 July 2025 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 15 7367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PARK (LGE) N ET AL: "CE4-related : Candidates optimization on MMVD", 13. JVET MEETING; 20190109 - 20190118; MARRAKECH; (THE JOINT VIDEO EXPLORATION TEAM OF ISO/IEC JTC1/SC29/WG11 AND ITU-T SG.16 ), , no. JVET-M0307 3 January 2019 (2019-01-03), XP030200785, Retrieved from the Internet: URL:http://phenix.int-evry.fr/jvet/doc_end _user/documents/13_Marrakech/wg11/JVET-M03 07-v1.zip JVET-M0307.docx [retrieved on 2019-01-03] | 9-12 | |
| A | * abstract * * seciton 1. "Introduction" * * tables 3-5 * | 1-8, 13-15 | |

----- 

| TECHNICAL FIELDS SEARCHED (IPC) |
|---|
| |

The present search report has been drawn up for all claims

| Place of search | Date of completion of the search | Examiner |
|---|---|---|
| The Hague | 7 July 2025 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

## ANNEX TO THE EUROPEAN SEARCH REPORT
## ON EUROPEAN PATENT APPLICATION NO.

EP 25 15 7367

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | Publication date | Patent family member(s) | Publication date |
|---|---|---|---|
| US 2018098089 A1 | 05-04-2018 | BR 112019006756 A2 | 02-07-2019 |
| | | CN 109792532 A | 21-05-2019 |
| | | EP 3523971 A1 | 14-08-2019 |
| | | ES 3022203 T3 | 28-05-2025 |
| | | JP 7077310 B2 | 30-05-2022 |
| | | JP 7438265 B2 | 26-02-2024 |
| | | JP 2019534626 A | 28-11-2019 |
| | | JP 2022122892 A | 23-08-2022 |
| | | KR 20190055109 A | 22-05-2019 |
| | | PL 3523971 T3 | 02-06-2025 |
| | | SG 11201901365Q A | 29-04-2019 |
| | | TW 201817238 A | 01-05-2018 |
| | | US 2018098089 A1 | 05-04-2018 |
| | | WO 2018067672 A1 | 12-04-2018 |
| US 11638016 B2 | 25-04-2023 | AU 2014376190 A1 | 07-07-2016 |
| | | BR 112016015854 A2 | 08-08-2017 |
| | | BR 122022001631 B1 | 14-03-2023 |
| | | CA 2935340 A1 | 16-07-2015 |
| | | CA 3118603 A1 | 16-07-2015 |
| | | CN 105900420 A | 24-08-2016 |
| | | CN 110099278 A | 06-08-2019 |
| | | CN 110149513 A | 20-08-2019 |
| | | CN 110177274 A | 27-08-2019 |
| | | EP 3075154 A1 | 05-10-2016 |
| | | JP 6498679 B2 | 10-04-2019 |
| | | JP 2017508344 A | 23-03-2017 |
| | | KR 20160106703 A | 12-09-2016 |
| | | KR 20210073608 A | 18-06-2021 |
| | | KR 20220019845 A | 17-02-2022 |
| | | KR 20220153111 A | 17-11-2022 |
| | | KR 20230127361 A | 31-08-2023 |
| | | KR 20240161211 A | 12-11-2024 |
| | | MX 359698 B | 08-10-2018 |
| | | MX 373555 B | 19-05-2020 |
| | | RU 2016127410 A | 10-01-2018 |
| | | US 2015195525 A1 | 09-07-2015 |
| | | US 2017359587 A1 | 14-12-2017 |
| | | US 2018131947 A1 | 10-05-2018 |
| | | US 2019281309 A1 | 12-09-2019 |
| | | US 2020177887 A1 | 04-06-2020 |
| | | US 2020329247 A1 | 15-10-2020 |
| | | US 2021337214 A1 | 28-10-2021 |
| | | US 2023209070 A1 | 29-06-2023 |
| | | US 2024414356 A1 | 12-12-2024 |
| | | WO 2015105662 A1 | 16-07-2015 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 7367

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | Publication date | Patent family member(s) | Publication date |
|---|---|---|---|
| | | | |

EPO FORM P0459

For more details about this annex : see Official Journal of the European Patent Office, No. 12/82